Europäisches Patentamt

European Patent Office

Office européen des brevets

(19)

(11) Veröffentlichungsnummer: **0 127 748**
**B1**

(12) **EUROPÄISCHE PATENTSCHRIFT**

(45) Veröffentlichungstag der Patentschrift: **18.07.90**

(51) Int. Cl.⁵: **B 65 G 23/44**

(21) Anmeldenummer: **84103922.5**

(22) Anmeldetag: **08.04.84**

(54) Spannvorrichtung für ein Förderband.

(30) Priorität: **12.04.83 DE 8310728 u**
**24.05.83 DE 8315238 u**

(43) Veröffentlichungstag der Anmeldung:
**12.12.84 Patentblatt 84/50**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**EP-A-0 074 649**
**DE-A-3 116 523**
**GB-A-1 601 253**
**US-A-2 764 276**
**US-A-3 951 257**

(73) Patentinhaber: **Geppert, Helmut**
**Niederfeld 12**
**D-5162 Niederzier-Krauthausen (DE)**

(72) Erfinder: **Geppert, Helmut**
**Niederfeld 12**
**D-5162 Niederzier-Krauthausen (DE)**

(74) Vertreter: **Liermann, Manfred**
**Josef-Schregel-Strasse 19**
**D-5160 Düren (DE)**

Courier Press, Leamington Spa, England.

## Beschreibung

Die Erfindung betrifft eine Spannvorrichtung für das Förderband einer eine Aufgabe- und eine Abgabewalze umfassenden Bandfördervorrichtung, von denen mindestens eine Walze gegenüber dem Rahmengestell der Bandfördervorrichtung durch ein Paar relativ zu diesem quer zur Walzenwelle oder -achse jeweils in zwei Langlöchern verschiebbar geführter und mittels diese durchgreifender Schraubelemente in Arbeitsstellung festlegbarer Walzenträger gehalten ist, wobei die jeweilige Arbeitsstellung jedes Walzenträgers durch eine jeweils zugeordnete Spanneinrichtung mit einem sich mit seinem walzenträgernahen Ende an einer Stirnseite des zugeordneten Walzenträgers abstützenden Gewindebolzen, der mit seinem walzenträgerfernen Ende axial verschieblich in einem rahmengestellfesten Flansch geführt und in jeder Axialstellung fixierbar ist, bestimmt ist und wobei die Walzenträger jeweils mindestens zwei in Spannrichtung hintereinander auf einer zumindest nahe einer die Drehachse (a, b) der hierauf gelagerten Walze schneidenden Linie angeordnete Langlöcher aufweisen.

Bei bekannten Bandfördervorrichtungen ist die Umlenkwalzenwelle in einem Paar auf der Innenseite der Rahmengestell-Konstruktion angeordneter, sogenannter innenliegender Walzenträger gelagert, die jeweils sich über die gesamte Höhe des Rahmengestells erstrecken und in möglichst weitem Abstand übereinander Langlöcher aufweisen, über die sie mittels eines gleichfalls innenliegenden Spindeltriebes gegenüber dem Rahmengestell verschiebbar und mittels klemmplattenfreier Verschraubungen in Arbeitsstellung festlegbar sind. Nachteilig bei dieser bekannten Ausführung ist die ungünstige Zugänglichkeit der Spindelspannstation, da diese nicht nur auf der Innenseite des Rahmengestells, sondern auch zwischen Unter- und Obertrum des Fördermittels gelegen ist, so daß eine Verstellung der Umlenkwalze während des Förderbetriebes überhaupt unmöglich ist.

Bei Bandfördervorrichtungen mit zusätzlich zu Aufgabe- und Abgabewalze vorgesehener Antriebswalze, die in einer an beliebiger Stelle der Länge der Bandfördervorrichtung zwischen Aufgabeund Abgabewalze angeordneten sogenannten innenliegenden Spannstation gehalten ist, ist es bekannt, daß die Antriebswalze über zwei hintereinander angeordnete Langlöcher in einem Paar von Lagerschilden gehalten und über jeweils rahmengestellfest gehalterte und andererseits jeweils an einem Lagerschild der Antriebswalze angelenkte Schraubspindeln verstellbar und mittels klemmplattenloser Verschraubungen in Arbeitsstellung festlegbar ist, wobei der Antriebswalze jeweils eine am Rahmengestell abgestützte Führungswalze für das Untertrum des Fördermittels vorund nachgeschaltet ist. Nachteilig bei dieser bekannten Ausführung ist der wegen der mit Anlenkung am zugeordneten Lagerschild über einen außerhalb des Rahmengestells gelegenen Zug- und Druckklotz arbeitenden Spindelspanneinrichtung verhältnismäßig breite Bauraum derselben und weiterhin die wegen der notwendigen Einzelteile und insbesondere der Zug- und Druckklotzanlenkung, die zudem auch noch die Gefahr von Lagerspiel im Verlauf längerer Einsatzzeiten mit entsprechender Steigerung des ohnehin vorhandenen ungünstigen Verkantungsmomentes mit sich bringt, erforderlichen verhältnismäßig hohen Fertigungskosten. Ferner kann durch die Konzeption der Führung der Lagerschilde die Antriebswalze mit ihrem verhältnismäßig großen Achsabstand zu den Langlöchern in ihren Lagerschilden einerseits und dem gleichfalls verhältnismäßig großen Abstand der lagerschildseitigen Anlenkung der Zug- und Druckklötze zu gleichen Langlöchern die Führungsbewegung der Lagerschilde insgesamt nicht besonders ruckfrei und glatt verlaufen und ist damit nicht voll zufriedenstellend. Dies ist auch bei dieser bekannten Ausführung bereits erkannt worden und man hat versucht, hier dadurch Abhilfe zu schaffen, daß zur Aufnahme des Verkantungsmomentes eine auf der spanneinrichtungsfernen Seite des Lagerschildes angeordnete und sich über einer nicht unbeträchtlichen Länge der Unterseite des Rahmengestells, die dann für Anbringung von Zusatzaggregaten etc. ausfällt, erstreckende Führungsleiste vorgesehen wird. Abgesehen von dem bereits angesprochenen Nachteil der Besetzung eines gewissen Teils der Länge des Rahmengestells durch diese Führungsleiste, die praktisch als Druckleiste dient, mittels welcher das bei dieser bekannten Ausführung unermeidliche Verkantungsmoment in das Rahmengestell eingeleitet wird, belastet das überhängende Gewicht der im übrigen aus Gründen für die Einleitung des Verkantungsmomentes in das Rahmengestell ausreichender Steifigkeit als die gesamte Höhe des zugeordneten Lagerschildes der Antriebswalze übergreifendes Dreieckteil ausgebildeten Führungsleiste ungünstig die Längskanten der Langlöcher im zugeordneten Lagerschild der Antriebswalze, wodurch zumindest nach längerer Betriebsdauer die gleichen nachteiligen Wirkungen zu befürchten sind, wie diese durch das gerade durch diese Führungsleisten abzufangende Verkantungsmoment allein auftreten würden.

Mit der US-A-2764 276 ist eine Einrichtung der eingangs, beschriebenen Art bekannt geworden. Eine solche bekannte Einrichtung baut jedoch relativ schwer und groß und erfordert die Anbringung eines seitlichen Gegenlagers im Bereich der Seitenflächen der Längsholme einer solchen Bandfördervorrichtung, wodurch die Bandfördervorrichtung um die Breite dieser Gegenlager an beiden Seiten unerwünschterweise verbreitert wird. Dies ist insbesondere bei Lagerung und Transport solcher Bandfördervorrichtungen nachteilig. Außerdem werden hierdurch zusätzliche Schweißarbeiten im Bereich der Längsholme der Bandfördervorrichtung notwendig. Bei einer Verstellung der Antriebsseite wird das Antriebsritzel ebenfalls mitbewegt. Dies aber erzwingt zusätzliche und in dieser US-Schrift nicht erkennbare Maßnahmen für den Längenausgleich einer Antriebskette.

Der Erfindung liegt somit die Aufgabe zugrunde, mit einfachen und kostengünstigen Mitteln unter Vermeidung der Nachteile bekannter Ausführungen von Bandfördervorrichtungen gattungsgemäßer Art ohne wesentliche Bauraumerfordernisse in Seitenrichtung ebenso wie ohne die Notwendigkeit in Längsrichtung des Rahmengestells der Bandfördervorrichtung ausladender und dessen Länge in die Anbringung von Zusatzaggregaten od. dgl. be- oder verhindernder Weise besetzender Führungsleisten od. dgl. eine Möglichkeit zu schaffen, auch während laufenden Förderbetriebes einfach, schnell und bequem für erforderlich erachtete Nachjustierungen der Spannung des Fördermittels, das im übrigen als, Einoder Mehrfachband oder -riemen oder als Scharnierband ausgebildet sein kann, vornehmen zu können, um eine solche Bandfördervorrichtung bestmöglich an die jeweiligen Erfordernisse des Förderbetriebes in jederzeit leicht zugänglicher Weise anpassen und erforderlichenfalls einfach, schnell und bequem für etwaige andere Förderaufgaben umrüsten zu können, wobei auch optisch das Maß der vorzunehmenden bzw. vorgenommenen Justierverstellung sogar bei laufendem Förderbetrieb ohne Schwierigkeiten wahrnehmbar und erwünschtenfalls auch einfach und bequem meßbar sein soll.

Dies wird durch die Erfindung in überraschend einfacher und wirtschaftlicher Weise dadurch erreicht, daß jedem Walzenträger eine vom Rahmengestell separate Widerlagerleiste zugeordnet ist, an der der Walzenträger mit seiner rahmengestellseitigen Fläche oder seiner vom Rahmengestell abgewandten Fläche anliegt und die von den die Langlöcher des zugeordneten Walzenträgers durchgreifenden, am Rahmengestell aufgenommenen Schraubelementen gehalten ist und an ihrem walzenfernen Ende einen das walzenferne Ende des zugeordneten Walzenträgers übergreifenden Widerlagerflansch aufweist, der mit einem Innengewinde versehen ist, wobei einer der Walzenträger der Aufgabewalze oder der Abgabewalze als Lagerschild für die rahmengestellfeste Halterung eines Antriebsmotors ausgebildet ist, der vorzugsweise als Getriebemotor mit einer Kupplungseinrichtung für Direktkupplung seiner Abtriebswelle mit der als Antriebswelle dienenden Welle der zugeordneten Aufgabeoder Abgabewalze oder mit einem kinematischen Übertragungskettenzug in Form eines Riemen- oder Kettentriebes ausgebildet ist.

Es ist ersichtlich, daß durch die erfindungsspezifische Kombination von teilweise für sich allein sogar bekannten Maßnahmen nur ein verhältnismäßig geringer seitlicher Überstand der Verstelleinrichtung für die Walzenträger erforderlich ist, der das übliche Maß herkömmlicher Walzenhalterungseinrichtungen praktisch nicht übersteigt, und daß ferner die leichte, schnelle und bequeme Zugänglichkeit der Verstelleinrichtung für die Vornahme gewünschter Verstellbewegungen sogar während laufenden Förderbetriebes jederzeit gewährleistet und schließlich auch durch gerade die Konzeption der Erfindung von vornherein Sorge dafür getragen ist, daß schädliche Verkantungsmomente praktisch gar nicht erst in beachtlichem Maße auftreten können, so daß eine ruckfreie und feinfühlige Einstellung der Fördermittelspannung durch entsprechende Anstellung der Aufgabe- oder Abgabewalze zuverlässig sichergestellt ist. Dadurch, daß bei der zweiten Alternative der Erfindung die Widerlagerleisten jeweils zwischen dem außenliegenden zugeordneten Walzenträger und dem Rahmengestell der Bandfördervorrichtung angeordnet sind, ist im übrigen die genaue lochmittenmäßige Zuordnung der Widerlagerleiste zum Rahmengestell und damit die exakte Definition und Einhaltung eines spezifischen Widerlager-Bezugspunktes durch weitestgehende Ausschaltung von Lose und/oder Kippbzw. Verkantungserscheinungen im Bereich der Widerlagerleistenabstützung im Vergleich zu einer Anordnung mit innenliegenden Walzenträgern und diese jeweils von der Außenseite her übergreifender zugeordneter Widerlagerleiste verbessert. Überdies bietet die erfindungsgemäße Anordnung und Zuordnung von Walzenträger und zugeordneter Widerlagerleiste die erwünschte Möglichkeit, ohne Schwierigkeiten durch einfache Augenscheinnahme die Arbeitsstellung der Schraubelemente bezüglich der jederzeit sichtbaren Randkante eines Langloches des Walzenträgers zu inspizieren, wofür im übrigen zur weiteren Erleichterung und/oder Steigerung der Genauigkeit der Messung eine Skala vorgesehen sein kann, oder aber diesen Abstand mittels eines geeigneten Meßinstrumentes zu bestimmen, das auch eine einfache Lehre sein kann. Hierbei kann gleichzeitig die Halterung des Antriebsmotors Berücksichtigung finden.

Während gemäß Anspruch 1 bei Verstellung der Walzenträger der zugeordneten Walze, beispielsweise der Abgabewalze, die zum Zweck der Ein- bzw. Nachjustierung der Spannung des Fördermittels erfolgt, der Antriebsmotor mit gegebenenfalls vorhandenem kinematischem Übertragungskettenzug in unveränderter Zuordnung seiner Abtriebswelle zur Antriebswelle, beispielsweise der Welle der Abgabewalze, mitverstellt wird, was gemäß Anspruch 2 sinngemäß auch für Führungswalzen gilt, kann entsprechend einer Alternative gemäß Anspruch 3 für den Antriebsmotor und gemäß Anspruch 4 für eine oder mehrere Führungswalze(n) eine solche Anordnung getroffen sein, daß bei Verstellung der Walzenträger relativ zu ihren rahmengestellfest gehaltenen Widerlagerleisten die Spannung des den kinematischen Übertragungskettenzug bildenden Riemen- oder Kettentriebes beeinflußt werden kann.

Dabei kann in weiterer zweckmäßiger Fortbildun gemäß Anspruch 5 eine geeignete Halterung für den Antriebsmotor einer zusätslichen Atriebswalze und gemäß Anspruch 6 für eine oder mehrere dieser Antriebswalze vor- oder nachgeschaltete Führungswalze(n) vorgesehen sein. Dabei ist auch hier die Zuordnung der Abtriebswelle zur Welle der Antriebswalze von der Verstellung der Walzenträger derselben unabhängig und konstant.

Soll eine Verstellung der Walzenträger der zusätlichen Antriebswalze gleichzeitig eine Änderung der Zuordnung der Abtriebswelle des Antriebsmotors zur Welle der Antriebswalze bewirken, so kann alternativ hierzu die Halterung des Antriebsmotors gemäß Anspruch 7 ausgeführt werden. Gleiches gilt für die Halterung von einer oder mehreren entsprechenden vor- oder nachgeschalteten Führungswalzen gemäß Anspruch 8.

In weiterer zweckmäßiger Fortbildung der Erfindung können ferner die Langlöcher in den Walzenträgern in Anordnung gemäß Anspruch 9 oder 10 vorgesehen sein. Vorzugsweise werden dabei die Langlöcher in den Walzenträgern etwa mittig angeordnet. Dies bedeutet einerseits, daß sie auf der zur Förderrichtung parallelen Mittellinie des zugeordneten Walzenträgers und/oder jeweils mittig, d.h. in gleichem Abstand bezüglich einer Normalen zur Förderrichtung F angeordnet sein können. Je nach Durchmesser der abzustützenden Walze können die Langlöcher jeweils gemäß einem der Ansprüche 14 bis 16 angeordnet sein. In allen Fällen jedoch ist gewährleistet, daß im Sinne der Erfindung Verkantungsmomente schädlicher Größe überhaupt nicht auftreten können.

Besonders bewährt insbesondere im Hinblick auf nicht nur konstruktive Einfachheit und besondere Kostengünstigkeit bei der Erstellung der Bandfördervorrichtung ebenso wie für die Erzielung einer besonderen Universalität im Hinblick auf deren Umrüstungsmöglichkeiten und die damit zusammenhängenden Kosten hat sich eine Anordnung der Langlöcher gemäß Anspruch 17.

Grundsätzlich kann bei der Erfindung die Festlegung der Walzenträger am Rahmengestell der Bandfördervorrichtung ebenso wie bei herkömmlichen Ausführungen klemmplattenlos erfolgen, indem die entsprechenden Schraubbolzen zugeordnete Löcher im jeweiligen Walzenträger durchgreifend in zugeordnete Gewindelöcher im Rahmengestell eingeschraubt oder zugeordnete Durchgangslöcher im Rahmengestell durchgreifend in entsprechende Gewindelöcher des Walzenträgers eingeschraubt oder aber zugeordnete Durchgangslöcher im Rahmengestell ebenso wie entsprechende Durchgangslöcher der Widerlagerleiste und die zugeordneten Langlöcher des Walzenträgers durchgreifend jeweils mit einer unter Zwischenschaltung einer Unterlegscheibe oder Druckplatte angreifenden Mutter verschraubt werden, wobei allerdings der erstgenannten Ausführung aufgrund besserer Zugänglichkeit der Schraubelemente der Vorzug zu geben wäre. Andererseits aber hat es sich besonders bewährt, wenn jeweils eine den die Verschraubungslöcher für die Festlegung eines Walzenträgers am Rahmengestell der Bandfördervorrichtung aufweisenden Teil derselben hintergreifende Klemmplatte vorgesehen ist.

Um unabhängig von der für die Änderung der Spannung des Fördermittels erforderlichen Verstellung der Walzenträger der betreffenden Antriebswalze eine Änderung der Zuordnung der Abtriebswelle des Antriebsmotors zur Welle der Antriebswalze zwecks Veränderung der Spannung des kinematischen Übertragungskettenzuges vornehmen zu können, kann gemäß einem anderen untergeordneten Erfindungsgedanken mit Vorteil eine Ausführung gemäß Anspruch 19 gewählt werden. Bei gerader Zahl von Befestigungslöchern im Lagerflansch des Antriebsmotors kann dabei eine Ausführung gemäß Anspruch 20 vorgesehen sein. Grundsätzlich kann im Rahmen der Erfindung der Antriebsmotor mit seiner Abtriebswelle auf der gleichen Seite seines Lagerschildes angeordnet sein wie die Welle der Antriebswalze, so daß eine Durchgriffsausnehmung für die Abtriebswelle des Antriebsmotors nicht erforderlich ist, die jedoch gemäß Anspruch 21 dann vorgesehen wird, wenn der Antriebsmotor mit seiner Abtriebswelle auf der der Welle der Antriebswalze gegenüberliegenden Seite seines Lagerschildes angeordnet ist.

Während die worstehend beschriebenen Ausführungsformen, soweit diese sich mit zur Verstellung der Walzenträger relativ zum Rahmengestell der Bandfördervorrichtung unabhängiger Verstellung der Abtriebswelle des Antriebsmotors relatiw zu seinem einen Walzenträger eines Paares von Walzenträgern für die Antriebswalze bildenden Lagerschild befassen, für die Verstellung der Abtriebswelle des Antriebsmotors von Hand ausgelegt sind, kann gemäß einem anderen Erfindungsgedanken gemäß Anspruch 22 in erfinderischer Fortbildung eine Möglichkeit für formschlüssige stufenlose Verstellung des Lagerflansches des Antriebsmotors vorgesehen sein. Dabei kann in weiterer zweckmäßiger Ausgestaltung dieses Erfindungsgedankens eine gemäß Anspruch 23 ausgebildete und angeordnete Stellschraube vorgesehen sein.

Weiterhin können alternativ zueinander diesen Erfindungsgedanken fortbildende Ausführungen gemäß einem der Ansprüche 24 bis 26 vorgesehen sein. Dabei kann das die Stellschraube führende Gewinde zweckmäßig gemäß Anspruch 27 ausgebildet und angeordnet sein. Hierdurch ergeben sich wiederum Möglichkeiten für die Vereinfachung der Fertigung und Nutzung der kostenmäßigen Vorteile von handelsüblich preisgünstig zur Verfügung stehenden Bauteilen.

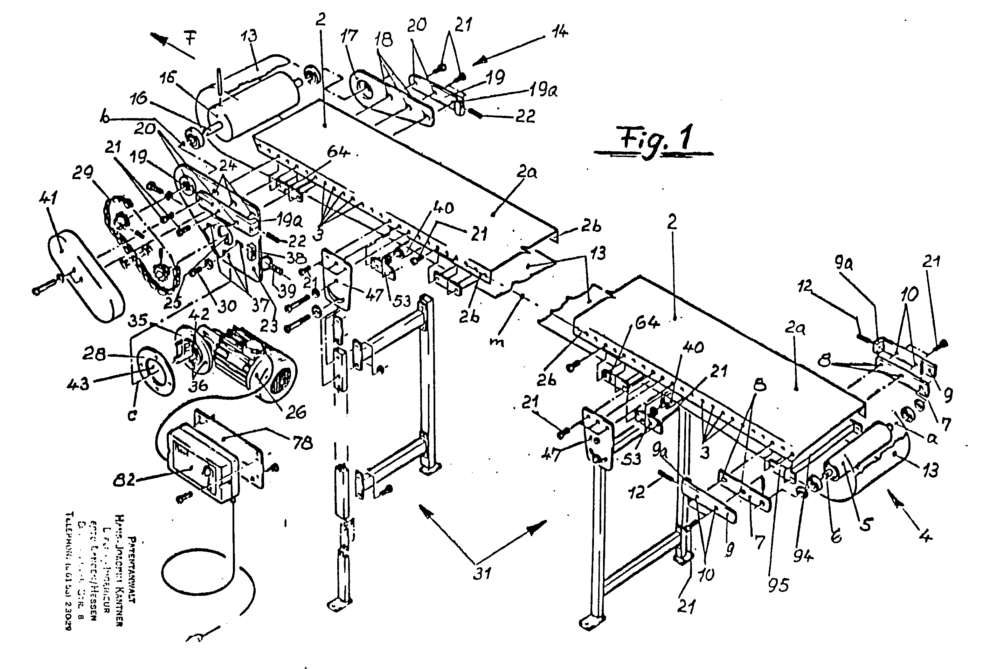

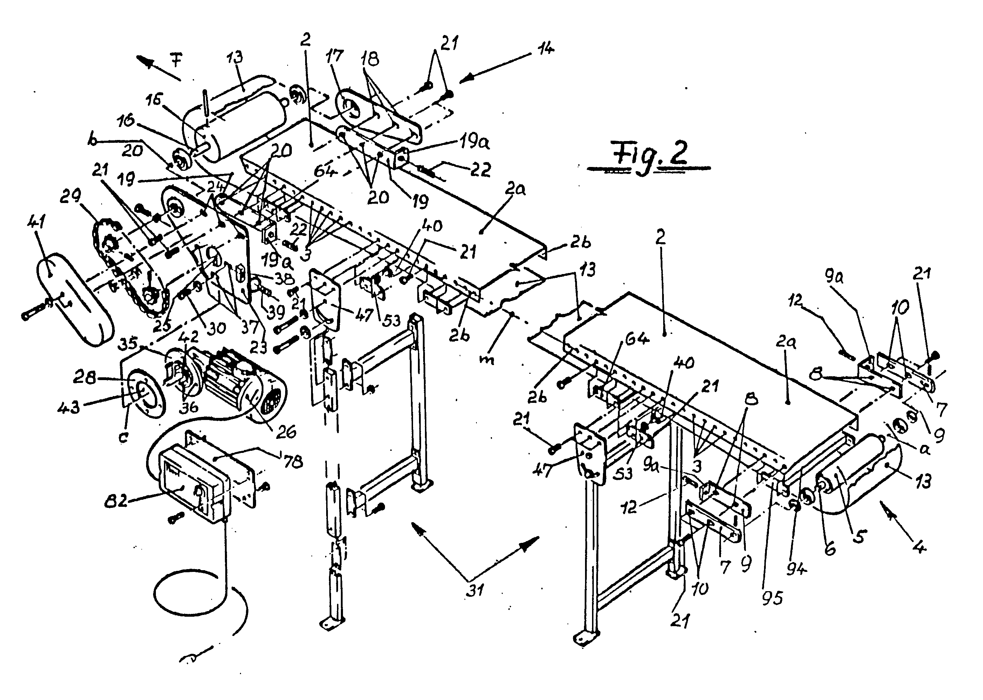

Im folgenden wird die Erfindung anhand zweier in Figur 1 und 2 der Zeichnungen in auseinandergezogener perspektivischer Darstellung lediglich schematisch wiedergegebener Ausführungsbeispiele rein beispielsweise näher erläutert.

Wie aus Figur 1 und 2 ersichtlich, welche die als Ganzes mit 1 bezeichnete Bandfördervorrichtung nach der Erfindung in auseinandergezogener Darstellung wiedergibt, ist für die Bildung des Förderbandrahmens lediglich ein Rahmentragprofil 2 vorgesehen, das bei dieser Ausführungsform der Erfindung als U-Profil mit ebenem Bodensteg 2a und sich von diesem gleichsinnig etwa normal wegerstreckenden Seitenstegen 2b ausgebildet ist. Die Seitenstege 2b weisen auf ihrer Mittellinie m jeweils eine Vielzahl in gleichem Abstand zueinander angeordneter Löcher 3 auf, die hier als Rundlöcher ausgebildet sind, aber auch als beispielsweise Langlöcher mit in der oder zumindest quer zur Richtung der Mittellinie m gleicher Größe ausgebildet sein könnten. Dieses mit seinem Bodensteg 2a nach oben weisend angeordnete und als U-Profil ausgebildete Rahmentragprofil 2 ist selbsttragend und bildet bereits für sich allein den Tragrahmen für die Bandfördervorrichtung 1. Im übrigen kann die Tragrahmen-Konstruktion der Bandfördervorrichtung 1 auch in anderer, dabei auch herkömmlicher Weise ausgebildet sein. So kann beispielsweise das Rahmentragprofil 2 (auch Förderbandrahmen bzw. Tragrahmen genannt) als aus Rahmenlängsholmen, die durch Querholme oder Querverbinder in beispielsweise U-Rinnenform ausgebildet sind, gebildete Konstruktion ausgeführt sein.

Das so gebildete Rahmentragprofil 2 (Rahmengestell) wird von einem Paar von Standfüßen 31 getragen, die jeweils aus einem Paar von Standpfeilern gebildet sind, welche durch Querholme mittels Schraubelementen miteinander verbunden sind, so daß ein biegeund torsionssteifer Standfuß gebildet wird. Zur Anpassung an eine bei Veränderung der Förderneigung der Bandfördervorrichtung 1 notwendigerweise auftretende Änderung der relativen Winkelstellung von Förderbandrahmen bzw. dieses bildendem Rahmentragprofil 2 und Standfüßen 31 sind Schwenkflansche 47 vorgesehen, von denen jeweils einer einem Standpfeiler der Standfüße 31 zugeordnet ist und die längs ihres oberen Randes eine Anzahl von Löchern etwa gleicher Größe wie der der Löcher 3 der Seitenstege 2b des Rahmentragprofils 2 aufweisen, welche in gleicher Rasteranordnung wie letztere vorgesehen sind, so daß die Schwenkflansche 47 über geeignete Schraubelemente, die aus Schraubbolzen, Mutter mit Unterlegscheibe und gegebenenfalls Kontermutter bestehen können, an beliebiger geeigneter Stelle der Seitenstege 2b des Rahmentragprofils 2 festgelegt werden können. Mittels der durch den zwar dargestellten, nicht jedoch näher bezeichneten kreisbogenförmigen Schlitz des Schwenkflansches 47 und das untere Loch des unterhalb desselben dargestellten Anschlußflansches hindurchgreifenden Feststellwerschraubung kann der Schwenkflansch 47 und mit ihm das Rahmentragprofil 2 bzw. der Förderbandrahmen in jeder beliebigen Schwenkstellung, die der Länge des Kreisbogenschlitzes entspricht, festgelegt werden.

An der rechts unten gezeigten Aufgabestelle für das Fördergut ist eine praktisch über der ganzen Breite des durch das Rahmentragprofil 2 gebildeten Förderbandrahmens durchgehende Aufgabewalze 5 mit einer Achse 6 vorgesehen, die unter Zwischenschaltung von zwar dargestellten, nicht jedoch näher bezeichneten Lagern und Distanzringen und Zwischenlegscheiben von einem Paar von Walzenträgern 7 abgestützt wird, von denen jeder auf seiner aufgabewalzenwellen- bzw. -achsenfernen Seite mindestens zwei Langlöcher 8 aufweist, die in der Rasteranordnung der Löcher 3 im zugeordneten Seitensteg 2b des Rahmentragprofils 2 entsprechender Anordnung vorgesehen sind, wie dargestellt, wobei der Lochabstand zweier benachbarter Langlöcher 8 im Walzenträger 7 keineswegs stets dem Lochabstand zweier benachbarter Löcher 3 im zugeordneten Seitensteg 2b des Rahmentragprofils 2 zu entsprechen braucht, vielmehr durchaus auch ein Vielfaches des letztgenannten Lochabstandes betragen kann, wie beispielsweise das Doppelte (ver gleiche auch die Darstellung. Die Achse 6 der Aufgabewalze 5 der als Ganzes mit 4 bezeichneten Aufgabewalzenhalterungseinrichtung ist lediglich in ein entsprechendes Aufnahmeloch im jeweiligen Walzenträger 7 eingeschoben und kann mit einer zwar dargestellten, jedoch nicht näher bezeichneten Madenschraube in ihrer gewünschten axialen Stellung fixiert werden.

Bei der Ausführung gemäß Figur 1 wird jeder der Walzenträger 7 von einer Widerlagerleiste 9 übergriffen, welche der Anordnung der Langlöcher 8 Walzenträger 7 entsprechend angeordnete Rundlöcher 10 aufweist, die demnach in ihrer Anordnung auch der Rasteranordnung der Löcher 3 im zugeordneten Seitensteg 2b des Rahmentragprofils 2 entsprechen. Bei der Ausführung gemäß Figur 2 hingegen ist zwischen jedem der Walzenträger 7 und dem zugeordneten Seitensteg 2b des Rahmentragprofils 2 eine Widerlagerleiste 9 angeordnet, welche der Anordnung der Langlöcher 8 im Walzenträger 7 entsprechend angeordnete Rundlöcher 10 aufweist, die demnach in ihrer Anordnung auch der Rasteranordnung der Löcher 3 im zugeordneten Seitensteg 2b des Rahmentragprofils 2 entsprechen. Bei der Ausführung gemäß Figur 1 greifen durch diese Löcher in der Widerlagerleiste 9 und die Langlöcher 8 im Walzenträger 7 sowie die mit diesen fluchtenden zugeordneten Löcher 3 im Seitensteg 2b des Rahmentragprofils 2 Schraubelemente 21 hindurch, die mit einer den Seitensteg 2b des Rahmentragprofils 2 hintergreifenden Klemmplatte verschraubbar sind, während bei der Ausführung gemäß Figur 2 durch diese Langlöcher 8 im Walzenträger 7 und die Löcher in der Widerlagerleiste 9 sowie mit diesen fluchtend zugeordneten Löcher 3 im Seitensteg 2b des Rahmentragprofils 2 Schraubelemente 21 hindurchgreifen, die mit einer den Seitensteg 2b des Rahmentragprofils 2 hintergreifenden Klemmplatte verschraubbar sind. Die Widerlagerleisten 9 weisen jeweils an ihrem aufgabewalzenwellen- bzw. -achsenfernen Ende einen sich das Ende des Walzenträgers 7 übergreifend zum Rahmentragprofil 2 hin erstreckenden Widerlagerflansch 9a auf, der mit einem Gewindeloch versehen ist, durch das eine Stellschraube 12 schraubbar ist, die mit ihrem Vorderende sich gegen eine entsprechende Anschlagfläche am Walzenträger 7, beispielsweise eine Stirnfläche desselben, legt und bei gelockerten Schraubelementen 21 es ermöglicht, durch mehr oder weniger großes Einschrauben in den Widerlagerflansch 9a den Walzenträger 7 und mit ihm das von ihm getragene Achsende der Aufgabewalze 5 mehr oder weniger weit gegenüber dem Stirnende des Rahmentragprofils zu verschieben. Ist die gewünschte Arbeitsstellung erreicht, brauchen lediglich die Schraubelemente 21 festgezogen zu werden, um diese Arbeitsstgellung des Walzenträgers 7 zu fixieren. Es ist hervorzuheben, daß die Klemmplatte dieser Verschraubung durchaus durch den Anschlußflansch 95 eines die Aufgabestelle für das Fördergut aussteifenden Querholms 94 gebildet sein kann, der durch einen Abschnitt von Kreis- oder Rechteckrohrmaterial gebildet sein kann, an dem beidendig jeweils ein Anschlußflansch 95 beispielsweise durch Schweißen festgelegt ist.

Am anderen Ende des durch das Rahmentragprofil 2 gebildeten Förderbandrahmens ist eine gleichfalls über praktisch dessen gesamte Breite durchgehende Abgabewalze 15 einer als Ganzes mit 14 bezeichneten Abgabewalzenhalterungseinrichtung mit ihrer Welle 16 unter Zwischenschaltung von zwar dargestellten, nicht jedoch näher bezeichneten Lagern in einem Paar von Abgabewalzenträgern 17, 23 abgestützt, die jeweils auf ihrer abgabewalzenfernen Seite eine Anzahl in Richtung der Mittellinie m der Löcher 3 in den zugeordneten Seitenstegen 2b des Rahmentragprofils 2 verlaufender Langlöcher 18 aufweisen, deren Anordnung so getroffen ist, daß sie der Rasteranordnung der Löcher 3 im zugeordneten Seitensteg 2b des Rahmentragprofils 2 in ähnlicher Weise entspricht, wie vorstehend bereits für die Walzenträger 7 der Aufgabewalzenhalterungseinrichtung 4 beschrieben. In der gleichen Weise werden bei der Ausführung gemäß Fig. 1 die abgabewalzenfernen Enden der Abgabewalzenträger 17, 23 für die Abgabewalze 15 jeweils von einer Widerlagerleiste 19 übergriffen, die mindestens zwei in der Anordnung der Langlöcher 18 im Abgabewalzenträger 17, 23 entsprechender Anordnung vorgesehene Rundlöcher 20 und an ihrem abgabewalzenfernen Ende einen das zugeordnete Ende des Abgabewalzenträgers 17, 23 übergreifend sich in Richtung des Rahmentragprofils 2 erstreckenden Widerlagerflansch 19a mit einem Gewindeloch aufweist, während bei der Ausführung gemäß Figur 2 in der gleichen Weise die abgabewalzenfernen Enden der Abgabewalzenträger 17, 23 für die Abgabewalze 15 jeweils von einer Widerlagerleiste 19 untergriffen werden, die mindeste zwei in der Anordnung der Langlöcher 18 im Abgabewalzenträger 17, 23 entsprechender Anordnung vorgesehene Rundlöcher 20 und an ihrem abgabewalzenfernen Ende einen das zugeordnete Ende des Abgabewalzenträgers 17, 23 übergreifend sich in Richtung vom Rahmentragprofil 2 weg erstreckenden Widerlagerflansch 19a mit einem Gewindeloch aufweist, in beiden Fällen in dieses Gewindeloch somit in bereits im Zusammenhang mit der Aufgabewalzenhalterungseinrichtung 4 beschriebener Weise eine Spannschraube 22 einschraubbar ist, die mit ihrem abgabewalzennahen Ende sich an eine Anlagefläche am Abgabewalzenträger 17, 23 die im Interesse möglichst geringer Baubreite mit Vorzug eine Stirnfläche desselben sein kann, anlegt und mittels derer in gleicher Weise, wie im Zusammenhang mit der spannfähigen Halterung der Aufgabewalze 5 bereits beschrieben, der Abgabewalzenträger 17, 23 und mit ihm das von ihm getragene Ende der Welle 16 der Abgabewalze 15 mehr oder weniger weit gegenüber dem zugeordneten Stirnende des Rahmentragprofils 2 versetzt werden kann. Zum Festspannen des Abgabewalzenträgers 17, 23 in seiner gewünschten Arbeitsstellung sind dann durch die Rundlöcher 20 in der Widerlagerleiste 19 und gleichzeitig die Langlöcher 18 im Abgabewalzenträger 17, 23 sowie die zugeordneten Löcher 3 im zugeordneten Seitensteg 2b des Rahmentragprofils 2 hindurchgreifende Schraubelemente 21 vorgesehen, die in bereits beschriebener Weise mit einer hier verdeckten Klemmplatte zusammenwirken, deren auf der gegenüberliegenden Seite wirksames Gegenstück jedoch erkennbar und mit 64 bezeichnet ist.

Am Rahmentragprofil 2 ist feruer ein Lagerschild 23 für einen Antriebsmotor 26 festgelegt und zwar dies mittels durch in der Rasteranordnung der Löcher 3 im Rahmentragprofil 2 entsprechender Anordnung vorgesehene Löcher 24 hindurchgreifender Schraubelemente 21. Dabei sind die Löcher 24 als sich in Richtung der Mittellinie m der Löcher im zugeordneten Seitensteg 2b des Rahmentragprofils 2 erstreckende Langlöcher ausgebildet, um eine gewisse Verschieblichkeit des Lagerschildes 23 und mit diesem des Antriebsmotors 26 gegenüber dem Rahmentragprofil 2 zu Nachjustierungszwecken bezüglich der Spannung des Fördermittels 13, das als Ein- oder Mehrförderband oder -riemen oder als Scharnierband ausgebildet sein kann, zu gewährleisten. Durch diese läßt sich auch eine gewisse Nachspannung des in Form eines Kettentriebes 29 ausgebildeten kinematischen Übertragungskettenzuges bei Beibehaltung der über die Spannschrauben 22 in den Widerlagerleisten 19 eingestellten Arbeitsstellung der Welle 16 der Abgabewalze 15 erreichen.

Aus Gründen besonders einfacher konstruktiver Ausgestaltung und der Einsparung von Einzelteilen ist der Lagerschild 23 gleichzeitig zu einem der beiden Walzenträger für die Antriebswelle 16 umfunktioniert, indem er zusätzlich eine der Lagerungsaufnahme für die Welle 16 im gegenüberliegenden Abgabewalzenträger 17 entsprechende Lagerungsaufnahme erhalten hat, durch welche die Welle 16 hindurchgreift, um auf ihrem freien Ende das Antriebsritzel des Kettentriebes 29 zu tragen, dessen Eintriebsritzel mit der Abtriebswelle des im übrigen als Getriebemotor ausgebildeten Antriebsmotors 26 verkeilt ist, der unter Verwendung eines Zwischenlageringes 28 von der Förderinnenseite des als Walzenträger dienenden Lagerschildes 23 her eine entsprechende Durchtrittsausnehmung 25 für seine Abtriebswelle durchgreifend mittels Verschraubungen 30 am Lagerschild 23 festgelegt ist. Der Kettentrieb 29 ist mittels eines Kettenkastens 41 abgedeckt, der am Lagerschild 23 festgelegt ist. Im übrigen erfolgt die Einstellverschiebung des Lagerträgers 23 in der gleichen Weise mittels einer Spannschraube 22 und einer Widerlagerleiste 19, wie für den gegenüberliegenden Abgabewalzenträger 17 vorstehend bereits beschrieben.

Die Darstellung der Ausführungsbeispiele der Erfindung läßf erkennen, daß bei diesen die Langlöcher 8 in einem nahezu der Hälfte der Bauhöhe des Rahmengestells 2 der Bandfördervorrichtung 1 entsprechenden Abstand von der Oberkante des zugeordneten Walzenträgers 7 und dabei gleichzeitig insoweit mittig in diesem angeordnet sind, als die jeweils auf der zur Förderrichtung F parallelen Mittellinie des zugeordneten Walzenträgers 7 liegen. Obgleich sie in diesem Fall nicht auch mittig bezüglich einer Normalen zur Förderrichtung F angeordnet sind, zeigt sich hier für die für eine Nachjustierung der Spannung des Fördermittels 13 während des laufenden Förderbetriebes wesentlich wichtigere Umlenkseite desselben, die hier durch die Aufgabestelle mit Aufgabewalze 5 bestimmt wird, die Bedeutung der erfindungsgemäßen Maßnahme, insbesondere bei Verwendung einer Umlenkwalze 5 für das Fördermittel 13 mit etwa der Bauhöhe des Förderbandrahmens 2 entsprechendem Durchmesser dafür zu sorgen, daß möglichst optimal die Wirkungslinie der Spannkraft durch die Drehachse a der Spannwalze (Aufgabewalze in ihrer Funktion als Umlenkwalze) läuft. Für manche Ausführungen von Bandfördervorrichtungen wird es hin und wieder bevorzugt, auf der der Antriebsseite gegenüberliegenden Seite des Fördermittels dieses über eine sogenannte Messerkantenführung laufen zu lassen, wobei diese durch ein entsprechend geformtes Umlenkblech an der Umlenkseite oder aber durch eine Umlenkwalze entsprechend geringen Durchmessers gebildet sein kann. Im letztgenannten Fall können mit Vorzug die Langlöcher 8 jeweils wenig oberhalb des Durchstoßpunktes der Drehachse a der zugeordneten als Umlenkwalze wirkenden Aufgabewalze 5 durch deren Walzenträger 7 angeordnet sein. In diesem Zusammenhang ist hervorzuheben, daß durchaus auch auf eine Spannmöglichkeit auf der der Antriebsseite gegenüberliegenden Seite des Förderers verzichtet werden kann, indem die Walzenträger 7 der als Umlenkwalze arbeitenden Aufgabewalze 5 über ihre Löcher, die dann keineswegs als Langlöcher ausgebildet zu sein brauchen, mit dem Rahmengestell 2 starr verschraubt werden. Ersichtlich bietet nämlich bereits die Antriebsseite der Bandfördervorrichtung 1 die Möglichkeit der Vornahme einer Änderung der Arbeitsspannung des Fördermittels 13 auch während des Förderbetriebes unabhängig von einer Beeinflussung der Kettenspannung des hier als Kettentrieb 29 ausgebildeten kinematischen Übertragungskettenzuges für das vom Antriebsmotor 26 aufgebrachte Drehmoment auf die als Antriebswelle fungierende Welle 16 der Abgabewalze 15. Da für die Einleitung eines ausreichend großen Antriebsdrehmomentes in das Fördermittel 13 ein größerer Durchmesser der Antriebswalze 15 zu bevorzugen ist, ist, wie dargestellt, hier mit Vorzug das Paar der zugeordneten Abgabewalzenträger 17, 23 so ausgebildet, daß die Langlöcher jeweils wenig oberhalb des Durchstoßpunktes der Drehachse b der als Antriebswalze eingesetzten Abgabewalze 15 durch deren Walzenträger 17, 23 liegen. Auch hier kommt es aufgrund der gemäß der Konzeption der Erfindung zu den die Verschiebeführung für die Nachstellbewegung der Walzenträge 17, 23 bildenden Langlöchern 18 bzw. 18, 24 mittigen Anordnung der Verstellverschraubung aus den Teilen 19a und 22 zu einer so optimalen Einleitung der Verstellkraft für die Nachjustierung der Fördermittelspannung, daß Verkantungsmomente, welche eine feinfühlige ruckfreie Vornahme der Änderung der Fördermittelspannung auch während des laufenden Förderbetriebes behindern oder gar verhindern könnten, praktisch gar nicht erst auftreten können, auch wenn die Drehachse b der hier zugeordneten und als Antriebswalze arbeitenden Abgabewalze 15 unterhalb der hier durch die Koinzidenz von Spannschraube 22 und Langlöchern 18 bzw. 18, 24 in den Abgabewalzenträgern 17, 23 gebildeten Wirkungslinie der Verstellbzw. Spannkraft liegt.

Wie dargestellt, weist der als Getriebemotor ausgebildete Antriebsmotor 26 einen Lagerflansch 35 mit vier Befestigungslöchern 36 auf und ist unter Zwischenschaltung eines Zwischenlageringes 28, der die an sich beabsichtigte Sperr- bzw. Verriegelungswirkung einer Zentrierstufe im Zentrum des Lagerflansches 35 aufhebt und gute Verschieblichkeit des Lagerflansches 35 gegenüber seiner Anlagefläche auf der Innenseite des Lagerschildes 23 für den Antriebsmotor 26 gewährleistet, eine ein ausreichendes Verschiebespiel gewährende Durchtrittsausnehmung 25 in diesem durchgreifend mittels durch Langlöcher 37 in diesem hindurchgreifender Verschraubung 30 am Lagerschild 23 festgelegt. Dabei ist die Anordnung der Befestigungslöcher 36 im Lagerflansch 35 und der zugeordneten Langlöcher 37 im Lagerschild 23 des Antriebsmotors 26 so getroffen, daß von den vier Paaren jeweils miteinander fluchtender Löcher jeweils zwei solcher Paare mit ihrer durch die Mittellinien der Langlöcher 37 gebildeten Verbindungslinie die Drehachse c der Abtriebswelle des Antriebsmotors 26 schneiden. Auf der außenliegenden Seite des Lagerschildes 23 ist ein Widerlagerflanch 38 angeordnet, und zwar für den Fall, daß es sich bei dem Lagerschild 23 um eine Blechkonstruktion handeln sollte, beispielsweise durch Anschweißen, oder aber für den Fall, daß der Lagerschild 23 ein Gießling sein sollte, durch entsprechende Gußanformung. Der Widerlagerflanch ist so angeordnet, daß ein in ihm vorgesehenes Gewindeloch gerade auf der vorstehend beschriebenen die Drehachse c der Abtriebswelle des Antriebsmotors 26 schneidenden Wirkungslinie liegt, die durch die koinzidenten Mittellinien der Langlöcher 37 bestimmt wird. In diese Gewindebohrung im Widerlagerflansch 38 ist ein Gewindebolzen 39 von seiner links liegenden Außenseite her verstellbar eingeschraubt, der mit seiner abtriebswellenseitigen Stirnfläche an der nächstliegenden Verschraubung 30 ganz einfach anliegen oder aber, wie angedeutet, mit einem Ringauge einen sich vom Lagerflansch 35 motorabtriebsachsparallel wegerstreckenden Mitnehmerstift (nicht gezeigt) umgreifen kann.

Es ist ersichtlich, daß auf diese Weise mittels der durch den erfindungsspezifisch ausgebildeten und angeordneten Widerlagerflansch 38 mit nicht näher bezeichnetem Gewindeloch und den beschriebenen Gewindebolzen 39 gebildeten Spanneinrichtung unabhängig von einer zur Anpassung an aufgrund bestimmter Förderverhältnisse einzuhaltende Fördermittelspannung gewählten Einstellung der Abgabewalzenträger 17, 23 für die Abgabewalze 15 zur Justierungsbeeinflussung der Kettenspannung des Kettentriebes 29 eine beliebige Verstellung der relativen Zuordnung der Abtriebswelle des Antriebsmotors 26 zur Welle 16 der Abgabewalze 15 vorgenommen werden kann, und zwar dies auch während laufenden Förderbetriebes, wobei durch die Konzeption der Erfindung auch hier von vornehereien für einen Ausschluß des Auftretens von Verkantungsmomenten überhaupt, die eine feinfühlige Verstellung bzw. Nachjustierung beeinträchtigen könnten, gesorgt ist.

Kommt es auf eine von der Beeinflussung der Fördermittelspannung (Bandspannung) unabhängige Verstellmöglichkeit für die relative Zuordnung von Abtriebswelle des Antriebsmotors 26 und Antriebswelle 16 der Abgabewalze 15 beispielsweise zum Zwecke der Beeinflussung der Kettenspannung im Kettentrieb 29 nicht an, so brauchen die Langlöcher 37 im Lagerschild 23 nicht als Langlöcher ausgebildet zu sein und hat die Ausrichtung der Befestigungslöcher 36 im Lagerflansch 35 des Antriebsmotors 26 ebenso wie insbesondere auch der Langlöcher 37 im Lagerschild 23 keine für die Erfindung wesentliche Bedeutung.

In der Darstellung des Ausführungsbeispiels der Erfindung sind ferner zwei Führungswalzen 40 gezeigt, die jeweils in einem Paar von Tragflanschen 53 gelagert sind, won denen jeweils nur einer sichtbar und dargestellt ist und die mittels durch in der Rasteranordnung der Löcher 3 in den Seitenstegen 2b des Rahmentragprofils 2 entsprechender Anordnung vorgesehene zwar dargestellte, nicht jedoch näher bezeichnete Löcher un durch sie hindurchgreifender Schraubelemente 21, die mit Vorzug als Schraubbolzen mit Mutter und Unterlegscheibe sowie gegebenenfalls Kontermutter und erforderlichenfalls Klemmplatte ausgebildet sein können, starr am Rahmentragprofil 2 (Rahmengestell) festgelegt sind. Auch für diese Führungswalzen 40 kann die Konzeption der Erfindung nutzbar gemacht werden, wenn es gilt, beispielsweise zur Beeinflussung der Laufrichtung des Untertrums des Fördermittels 13 die Führungswalzen 40 um ein gewisses Maß auf Sturz zu stellen. In einem solchen Fall sind dann in ihrer Anordnung der Rasteranordnung der Löcher 3 in den Seitenstegen 2b des Rahmengestells 2 entsprechende Löcher in den Tragflanschen 53 gleichfalls als Langlöcher in der gleichen Weise ausgeführt und angeordnet, wie für die Langlöcher 8 bzw. 18 bzw. 24 in den Walzenträgern 17 bzw. 17, 23 vorstehend bereits beschrieben, und es wird auch für jeden dieser Tragflansche 53 in der gleichen bereits beschriebenen Weise eine zwischenliegend angeordnete Widerlagerleiste mit Widerlagerflansch und Verstell- bzw. Spanneinrichtung (nicht dargestellt) vorgesehen. Auf diese Weise läßt sich in der gleichen einfachen Weise schnell und problemlos auch während laufenden Förderbetriebes eine einseitige oder beidseitige Verstellung der einen oder anderen Führungswalze 40 hinsichtlich der Ausrichtung ihrer Drehachse bezüglich der Förderrichtung bzw. der Mittellängslinie der Bandfördervorrichtung 1 vornehmen.

Dargestellt ist im übrigen auch noch ein Steuerpult 82 für den Antriebsmotor 26, welches über einen nicht notwendigerweise verstellbaren Tragflansch 78 am Rahmengestell 2 festgelegt ist.

Abschließend ist noch zu erwähnen, daß, obgleich nicht dargestellt, auch ein sogenannter Mittelantrieb vorgesehen sein kann, wenn es auf unveränderte genaue Einhaltung des äußeren Längenmaßes der Bandfördervorrichtung 1 ankommt wie das beispielsweise dann der Fall sein kann, wenn diese in eine Förderlinie bzw. ein Materialflußsystem integriert ist, indem dann sowohl Aufgabewalze 5 als auch Abgabewalze 15 als Umlenkwalze arbeiten und zusätzlich zu diesen eigens eine separate Antriebswalze vorgesehen wird, die in einem Paar von eigenen Lagerschilden gehalten ist, welche in der gleichen Weise ausgebildet und mittels einer Verstell bzw. Spanneinrichtung relativ zum Rahmengestell 2 verschiebbar angeordnet sind wie die Walzenträger bzw. 17, 23. Auch hier kann einer der beiden Walzenträger der Antriebswalze in für den Lagerschild 23 beschriebener Weise als Lagerschild für den von ihm getragenen Antriebsmotor 26 gegebenenfalls mit zugehörigem Übertragungskettenzug und etwa vorgesehenen Umlenkwalzen ausgebildet und angeordnet sein. Die der Antriebswelle zugeordnete(n) Umlenkwalze(n), von denen mit Vorzug jeweils eine der Antriebswalze vorgeschaltet und die andere der Antriebswalze nachgeschaltet ist, kann bzw. können aber auch in eigenen Tragflanschen am Rahmengestell 2 gehaltert sein, welche ihrerseits in der gleichen Weise, wie für die Tragflansche 53 der Führungswalzen 40 vorstehend beschrieben, gemäß der Konzeption der Erfindung relativ zum Rahmengestell 2 verstellbar sein können.

Es ist ersichtlich, daß die Erfindung, obgleich sie lediglich anhand eines Ausführungsbeispiels dargestellt und erläutert ist, nicht auf dieses beschränkt ist, vielmehr dem Fachmann vielfältige Möglichkeiten offen stehen, sie an die jeweiligen konstruktiven und insbesondere materialmäßigen sowie fertigungstechnischen Gegebenheiten und die Anforderungen des jeweiligen Einsatzfalles anzupassen, ohne dadurch den Rahmen der Erfindung zu verlassen. Insbesondere ist in diesem Zusammenhang darauf hinzuweisen, daß mit Vorzug nicht nur die Walzenträger bzw. Lagerschilde bzw. Tragflansche als Blechformlinge ausgebildet sein können, sondern insbesondere auch die diese jeweils übergreifenden bzw. zwischen diesen und dem Rahmengestell jeweils angeordneten Widerlagerleisten. Auf diese Weise wird nämlich der größte Nutzen aus der Konzeption der Erfindung gezogen, die Wirkungslinie der Krafteinleitung jeweils so zu legen, daß die gefürchteten Verkantungsmomente praktisch vollständig ausgeschaltet sind, so daß auch entsprechende mechanische Belastungen der zugeordneten Bauteile der Bandfördervorrichtung nach der Erfindung nicht zu befürchten sind und diese, nämlich insbesondere die Walzenträger bzw. Lagerschilde bzw. Tragflanschen, vergleichsweise besonders leicht und einfach und damit zusammenhängend fertigungstechnisch besonders wirtschaftlich hergestellt werden können und gleichzeitig sich der benötigte seitliche Bauraum auf ein Minimum reduziert.

Grundsätzlich kann gemäß einer zweckmäßigen Ausführungsform die Stellschraube als einen am Lagerflansch 35 des Antriebsmotors 26 angeordneten (nicht gezeigten) Mitnehmerstift mit einem an ihrem motorabtriebswellennahen Ende angeordneten Haltering umgreifende Augenschraube ausgebildet sein, wobei dann weiterhin dies Augenschraube mit ihrem halteringfernen freien Ende in ein Loch in einem sich won der Außenoberfläche des Lagerschildes 23 für den Antriebsmotor 26 wegerstreckend fest angeordneten Widerlagerflansch 38 eingreift oder dieses durchgreift und eine sich auf der motorabtriebswellennahen Seite desselben in Anlage an einer Druckfläche an diesem befindende Stellmutter aufweist.

Bevorzugt wird jedoch eine Ausführungsform gemäß einer anderen erfinderischen Fortbildung, nach der die Stellschraube als an einer Druckfläche auf der benachbarten Seite des Lagerflansches 35 des Antriebsmotors 26, die mit Vorzug durch dessen Mantelfläche gebildet sein kann, mit seinem motorabtriebswellennahen freien Ende in Anlage bringbarer Gewindestift ausgebildet ist, wobei dann zweckmäßig der Gewindestift 39 in einem Innengewinde eines Gewindeloches in einem sich von der Außenoberfläche des Lagerschildes für den Antriebsmotor 26 wegerstreckend fest angeordneten Widerlagerflansch 38 geführt ist. Diese bevorzugte Ausführung gemäß diesem Erfindungsgedanken löst dabei gleichzeitig auch noch die folgenden sich der der Erfindung zugrundeliegenden übergeordneten Aufgabe unterordnenden weiteren Aufgaben: Es kommt nicht selten vor, daß der Motor abgenommen werden muß, wie beispielsweise wegen Austausches desselben. Durch die worstehend beschriebene bevorzugte Ausführungsform wird dabei gewährleistet, daß dieser oder sein Austauschmotor sofort wieder in der erforderlichen Spannstellung seine Arbeitslage einnimmt und sogleich wieder in dieser festgezogen werden kann. Sollten sich die Befestigungsschrauben des Antriebsmotors 26 im Laufe des Betriebes einmal lockern, so wirkt die als Gewindebolzen 39 ausgebildete Stellschraube als weitere Sicherungsabstützung für die Spannstellung. Ferner ermöglicht diese bevorzugte Ausführung, nach Lösen der Befestigungsschrauben ohne weitere Komplikationen bezüglich der Demontage anderer Einzelteile den Antriebsmotor sofort in Richtung seiner Abtriebswellenachse vom Lagerschild 23 abzuziehen.

Eine weitere erfinderische Fortbildung hat zur Aufgabe, einerseits die Flächenpressung, die durch die Verschraubung 30 auf den Lagerflansch 35 des Antriebsmotors 26 aufgebracht wird, durch Vergrößerung der Anlagefläche zu verringern und unzulässige Biege- und/oder Torsionsbelastungen des Lagerflansches 35 auszuschalten sowie eine von störenden Stufen freie Verschiebe- bzw. Verstellfläche auch dann zu gewährleisten, wenn der Lagerflansch des Antriebsmotors 26 einen Zentrierflansch aufweisen sollte, so daß auch hier handelsüblich schnell und preisgünstig verfügbare Normteile beispielsweise in Form eines Antriebsmotors in Normausführung Verwendung finden können. Dieser Erfindungsgedanke kennzeichnet sich dadurch, daß zwischen Lagerflansch 35 und Lagerschild 23 des Antriebsmotors 26 ein Zwischenlagering 28 angeordnet ist, der eine einen sich axial vom Lagerflansch 35 nach außen wegerstreckenden Zentrierflansch 42 aufnehmende Ausnehmung 43 und eine mindestens der axialen Länge dieses Zentrierflansches 42 entsprechende Dicke aufweist.

**Patentansprüche**

1. Spannvorrichtung für das Förderband einer eine Aufgabe- und eine Abgabewalze umfassenden Bandfördervorrichtung, von denen mindestens eine Walze gegenüber dem Rahmengestell (2) der Bandfördervorrichtung (1) durch ein Paar relativ zu diesem quer zur Walzenwelle oder -achse jeweils in zwei Langlöchern (8, 18, 24) verschiebbar geführter und mittels diese durchgreifender Schraubelemente (21) in Arbeitsstellung festlegbarer Walzenträger (7, 17, 23) gehalten ist, wobei die jeweilige Arbeitsstellung jedes Walzenträgers (7, 17, 23) durch eine jeweils zugeordnete Spanneinrichtung mit einem sich mit seinem walzenträgernahen Ende an einer Stirnseite des zugeordneten Walzenträgers (7, 17, 23) abstützenden Gewindebolzen (12, 22), der mit seinem walzenträgerfernen Ende axial verschieblich in einem rahmengestellfesten Flansch geführt und in jeder Axialstellung fixierbar ist bestimmt ist und wobei die Walzenträger (7, 17, 23) jeweils mindestens zwei in Spannrichtung hintereinander auf einer zumindest nahe einer die Drehachse (a, b) der hierauf gelagerten Walze (5, 15) schneidenden Linie angeordnete Langlöcher (8, 18, 24) aufweisen, dadurch gekennzeichnet, daß jedem Walzenträger (7, 17, 23) eine vom Rahmengestell (2) separate Widerlagerleiste (9, 19) zugeordnet ist, an der der Walzenträger (7, 17, 23) mit seiner rahmengestellseitigen Fläche oder seiner vom Rahmengestell (2) abgewandten Fläche anliegt und die von den die Langlöcher (8, 18, 24) des zugeordneten Walzenträgers (7, 17, 23) durchgreifenden, am Rahmengestell (2) aufgenommenen Schraubelementen (21) gehalten ist und an ihrem walzenfernen Ende einen das walzenferne Ende des zugeordneten Walzenträgers (7, 17, 23) übergreifenden Widerlagerflansch (9a, 19a) aufweist, der mit einem Innengewinde versehen ist, wobei einer der Walzenträger (7 bzw. 17, 23) der Aufgabewalze (5) oder der Abgabewalze (15) als Lagerschild (23) für die rahmengestellfeste Halterung eines Antriebsmotors (26) ausgebildet ist, der vorzugsweise als Getriebemotor mit einer Kupplungseinrichtung für Direktkupplung seiner Abtriebswelle mit der als Antriebswelle dienenden Welle (z.B. 16) der zugeordneten Aufgabe- oder Abgabewalze (z.B 15) oder mit einem kinematischen Übertragungskettenzug in Form eines Riemen- oder Kettentriebes (29) ausgebildet ist.

2. Vorrichtung nach Anspruch 1, dadurch gekennzeichnet, daß die Walzenträger (7 bzw. 17, 23) der Aufgabewalze (5) und/oder der Abgabewalze (15) als Lagerschilde für eine dieser voroder nachgeschaltete Führungswalze (40) ausgebildet sind.

3. Spannvorrichtung für das Förderband einer eine Aufgabe- und eine Abgabewalze umfassenden Bandfördervorrichtung, von denen mindestens eine Walze gegenüber dem Rahmengestell (2) der Bandfördervorrichtung (1) durch ein Paar relativ zu diesem quer zur, Walzenwelle oder -achse jeweils in zwei Langlöchern (8, 18, 24) verschiebbar geführter und mittels diese durchgreifender Schraubelemente (21) in Arbeitsstellung festlegbarer Walzenträger (7, 17, 23) gehalten ist, wobei die jeweilige Arbeitsstellung jedes Walzenträgers (7, 17, 23) durch eine jeweils zugeordnete Spanneinrichtung mit einem sich mit seinem walzenträgernahen Ende an einer Stirnseite des zugeordneten Walzenträgers (7, 17, 23) abstützender Gewindebolzen (12, 22), der mit seinem walzenträgerfernen Ende axial verschieblich in einem rahmengestellfesten Flansch geführt und in jeder Axialstellung fixierbar ist, bestimmt ist und wobei die Walzenträger (7, 17, 23) jeweils mindestens zwei in Spannrichtung hintereinander auf einer zumindest nahe einer die Drehachse (a, b) der hierauf gelagerten Walze (5, 15) schneidenden Linie angeordnete Langlöcher (8, 18, 24) aufweisen, dadurch gekennzeichnet, daß jedem Walzenträger (7, 17, 23) eine vom Rahmengestell (2) separate Widerlagerleiste (9, 19) zugeordnet ist, an der der Walzenträger (7, 17, 23) mit seiner rahmengestellseitigen Fläche oder seiner vom Rahmengestell (2) abgewandten Fläche anliegt und die von den die Langlöcher (8, 18, 24) des zugeordneten Walzenträgers (7, 17, 23) durchgreifenden, am Rahmengestell (2) aufgenommenen Schraubelementen (21) gehalten ist und an ihrem walzenfernen Ende einen das walzenferne Ende des zugeordneten Walzenträgers (7, 17, 23) übergreifenden Widerlagerflansch (9a, 19a) aufweist, der mit einem Innengewinde versehen ist, wobei die Widerlagerleiste (9 bzw. 19) eines der Walzenträger (7 bzw. 17, 23) der Aufgabewalze (5) oder der Abgabewalze (15) als Lagerschild (23) für die rahmengestellfeste Halterung eines Antriebsmotors (26) ausgebildet ist, der vorzugsweise als Getriebemotor mit einer Kupplungseinrichtung für Direktkupplung seiner Abtriebswelle mit der als Antriebswelle dienenden Welle (z.B. 16) der zugeordneten Aufgabe- oder Abgabewalze (z.B. 15) oder mit einem kinematischen Übertragungskettenzug in Form eines Riemen- oder Kettentriebes (29) ausgebildet ist.

4. Vorrichtung nach Anspruch 3, dadurch gekennzeichnet, daß die Widerlagerleisten (9 bzw. 19) der Walzenträger (7 bzw 17, 23) der Aufgabewalze (5) und/oder der Abgabewalze (15) als Lagerschilde für eine dieser voroder nachgeschaltete Führungswalze (40) ausgebildet sind.

5. Vorrichtung nach Anspruch 1 oder 3, dadurch gekennzeichnet, daß einer der Walzenträger einer zusätzlich zu Aufgabe- und Abgabewalze (5 bzw. 15) vorgesehenen Antriebswalze als Lagerschild für die rahmengestellfeste Halterung eines vorzugsweise als Getriebemotor mit einer Kupplungseinrichtung für die Direktkupplung seiner Abtriebswelle (27) mit der Welle der Antriebswalze oder mit einem kinematischen Übertragungskettenzug in Form eines Riemen- oder Kettentriebes (29) ausgebildeten Antriebsmotors (26) ausgebildet ist.

6. Vorrichtung nach Anspruch 5, dadurch gekennzeichnet, daß die Walzenträger der zusätzlich zu Aufgabe- und Abgabewalze (5 bzw. 15) vorgesehenen Antriebswalze als Lagerschild für eine dieser vor- oder nachgeschaltete Führungswalze (40), vorzugsweise für je eine dieser vorgeschaltete und eine dieser nachgeschaltete Führungswalze (40), ausgebildet sind.

7. Vorrichtung nach Anspruch 5, dadurch gekennzeichnet, daß die Widerlagerleiste eines der Walzenträger der zusätzlich zu Aufgabe- und Abgabewalze (5 bzw. 15) vorgesehenen Antriebswalze als Lagerschild für die rahmengestellfeste Halterung eines vorzugsweise als Getriebemotor mit einer Kupplungseinrichtung für Direktkupplung seiner Abtriebswelle (27) mit der Welle der Antriebswalze oder mit einem kinematischen Übertragsungskettenzug in Form eines Riemen- oder Kettentriebes (29) ausgebildeten Antriebsmotors (26) ausgebildet ist.

8. Vorrichtung nach Anspruch 7, dadurch gekennzeichnet, daß die Widerlagerleisten der Walzenträger der zusätzlich zu Aufgabe- und Abgabewalze (5 bzw. 15) vorgesehenen Antriebswalze als Lagerschild für eine dieser vor- oder nachgeschalteten Führungswalze (40), vorzugsweise für je eine dieser vorgeschaltete und einer dieser nachgeschaltete Führungswalze (40) ausgebildet sind.

9. Vorrichtung nach einem der vorhergehenden Ansprüche, dadurch gekennzeichnet, daß die Langlöcher (8 bzw. 18 bzw. 24) in den Walzenträgern (7 bzw. 17, 23) in einem dem Lochabstand der Verschraubungslöcher 3 im Rahmengestell (2) der Bandfördervorrichtung (1) von dessen Oberkante entsprechenden Abstand von der Oberkante des zugeordneten Walzenträgers (7 bzw. 17, 23) angeordnet sind.

10. Vorrichtung nach einem der vorhergehenden Ansprüche, dadurch gekennzeichnet, daß die Langlöcher (8 bzw. 18 bzw. 24) in einem zumindest nahezu der Hälfte der Bauhöhe des Rahmengestells (2) der Bandfördervorrichtung (1) entsprechenden Abstand von der Oberkante des zugeordneten Walzenträgers (7 bzw. 17, 23) angeordnet sind.

11. Vorrichtung nach einem der vorhergehenden Ansprüche, dadurch gekennzeichnet, daß die Langlöcher (8 bzw. 18 bzw 24) in den Walzenträgern (7 bzw. 17, 23) etwa mittig in diesen angeordnet sind.

12. Vorrichtung nach Anspruch 11, dadurch gekennzeichnet, daß die Langlöcher (8 bzw. 18 bzw. 24) jeweils auf der zur Förderrichtung (F) parallelen Mittellinie des zugeordneten Walzenträgers (7 bzw. 17, 23) angeordnet sind.

13. Vorrichtung nach einem der vorhergehenden Ansprüche, dadurch gekennzeichnet, daß die Langlöcher (8 bzw. 18 bzw. 24) jeweils mittig bezüglich einer Normalen zur Förderrichtung (F) angeordnet sind.

14. Vorrichtung nach einem der vorhergehenden Ansprüche, dadurch gekennzeichnet, daß die Langlöcher (8 bzw. 18 bzw. 24) jeweils wenig oberhalb des Durchstoßpunktes der Drehachse (a bzw. b) der zugeordneten Walze (5 bzw. 15) durch deren Walzenträger (7 bzw. 17, 23) angeordnet sind.

15. Vorrichtung nach einem der Ansprüche 1 bis 13, dadurch gekennzeichnet, daß die Langlöcher (8 bzw. 18 bzw. 24) jeweils wenig unterhalb des Durchstoßpunktes der Drehachse (a bzw. b) der zugeordneten Walze (5 bzw. 15) durch deren Walzenträger (7 bzw. 17, 23) angeordnet sind.

16. Vorrichtung nach einem der Ansprüche 1 bis 13, dadurch gekennzeichnet, daß die Langlöcher (8 bzw. 18 bzw. 24) jeweils auf einer die Drehachse (a bzw. b) der zugeordneten Walze (5 bzw. 15) schneidenden Linie angeordnet sind.

17. Vorrichtung nach einem der vorhergehenden Ansprüche, dadurch gekennzeichnet, daß die Langlöcher (8 bzw. 18 bzw. 27) in den Walzenträgern (7 bzw. 17, 23) in der Rasteranordnung von in einem sich etwa vertikal erstreckenden Steg (2b) oder Wandungsteil des Rahmengestells (2) der Bandfördervorrichtung (1) gemäß einem Linienraster mit gleichem Lochabstand vorgesehenen Löchern (3) entsprechender Anordnung vorgesehen sind.

18. Vorrichtung nach einem der vorhergehenden Ansprüche, dadurch gekennzeichnet, daß jeweils eine den die Verschraubungslöcher (3) für die Festlegung eines Walzenträgers (7 bzw. 17, 23) am Rahmengestell (2) der Bandfördervorrichtung (1) aufweisenden Teil (2b) derselben hintergreifende Klemmplatte (64) vorgesehen ist.

19. Vorrichtung nach einem der Ansprüche 1 bis 18 dadurch gekennzeichnet, daß der Lagerschild (23) für den Antriebsmotor (26) eine der Zahl der einen Lagerflansch (35) des Antriebsmotors (26) durchgreifenden Befestigungslöcher (36) entsprechende Anzahl von sich in vorgesehener Spannrichtung erstreckenden Langlöchern (37) von zumindest dem vorbestimmten maximalen Maß der Versatzbewegung der Abtriebswelle des Antriebsmotors (26) entsprechender Länge aufweist, von denen jeweils mindestens eines mit seiner Mittellinie die Drehachse (c) der Abtriebswelle des Antriebsmotors (26) schneidet.

20. Vorrichtung nach Anspruch 19 mit gerader Zahl von Befestigungslöchern im Lagerflansch (35) des Antriebsmotors, dadurch gekennzeichnet, daß zwei sich gegenüberliegenden Befestigungslöchern (36) im Lagerflansch (35) des Antriebsmotors (26) entsprechende Langlöcher (37) des Lagerschildes (23) des Antriebsmotors (26) von zumindest dem vorbestimmten maximalen Maß der Versatzbewegung der Abtriebswelle (des Antriebsmotors (26) entsprechender Länge in sich gemeinsam in vorgesehener Spannrichtung erstreckender und mit ihrer gemeinsamen Mittellinie die Drehachse (c) der Abtriebswelle (27) des Antriebsmotors (26) schneidender Anordnung vorgesehen sind.

21. Vorrichtung nach Anspruch 19 oder 20, dadurch gekennzeichnet, daß der Lagerschild (23) für den Antriebsmotor (26) eine als sich in vorgesehener Spannrichtung erstreckendes Langloch von zumindest dem vorbestimmten maximalen Maß der Versatzbewegung der Abtriebswelle des Antriebsmotors (26) entsprechender Länge ausgebildete Durchgriffsausnehmung (25) für die Abtriebswelle des Antriebsmotors (26) aufweist.

22. Vorrichtung nach einem der Ansprüche 19 bis 21, gekennzeichnet durch eine an dem das bzw. eines der mit seiner bzw. ihrer Mittellinie die Drehachse (c) der Abtriebselle des Antriebsmotors (26) schneidende(n) Langloch (25) bzw. Langlöcher (37) durchgreifenden Schraubbolzen (30) für die Festlegung des Antriebsmotors (26) an seinem Lagerschild (23) formschlüssig angreifende Verstelleinrichtung (38, 39) für stufenlose Verstellung des Lagerflansches (35) des Antriebsmotors (26) in vorgesehener Spannrichtung.

23. Vorrichtung nach Anspruch 22, dadurch gekennzeichnet, daß die Verstelleinrichtung (38, 39) einem jeden Lagerflansch (35) des Antriebsmotors (26) zugeordnet jeweils eine rahmengestellfest oder lagerschildfest gelagerte Stellschraube (39) aufweist, mittels derer der Lagerflansch (35) in vorgesehener Spannrichtung verstellbar ist.

24. Vorrichtung nach Anspruch 22 oder 23, dadurch gekennzeichnet, daß der Lagerschild (23) für den Antriebsmotor (26) einen sich von seiner Außenoberfläche wegerstreckend fest angeordneten Widerlagerflansch (38) aufweist, gegenüber dem sich einerseits gegenüber dem Rahmengestell (2) der Bandfördervorrichtung (1) oder dem Lagerflansch (35) des Antriebsmotors (26) abstützende Stellschraube (39) abstützt.

25. Vorrichtung nach Anspruch 24, dadurch gekennzeichnet, daß die Stellschraube (39) in einem Gewinde des Widerlagerflansches (38) des Lagerschildes (23) für den Antriebsmotor (26) geführt ist und sich gegenüber einer Anschlagfläche am Rahmengestell (2) der Bandfördervorrichtung (1) oder am Lagerflansch (35) des Antriebsmotors (26) abstützt.

26. Vorrichtung nach Anspruch 24, dadurch gekennzeichnet, daß die Stellschraube (39) in einem am Rahmengestell (2) der Bandfördervorrichtung (1) oder am Lagerflansch (35) des Antriebsmotors (26) vorgesehenen Gewinde geführt ist und sich, vorzugsweise eine Bohrung im Widerlagerflansch (38) des Lagerschildes (23) für den Antriebsmotor (26) durchgreifend, an einer Anschlagfläche desselben abstützt.

27. Vorrichtung nach Anspruch 25 oder 26, dadurch gekennzeichnet, daß das Gewinde durch das Innengewinde einer am Widerlagerflansch (38) des Lagerschildes (23) für den Antriebsmotor (26) oder am Rahmengestell (2) der Bandfördervorrichtung (1) oder am Lagerflansch (35) des Antriebsmotors (26) konzentrisch zu einer Bohrung in diesem angeschweißten Mutter gebildet ist.

28. Vorrichtung nach einem der vorhergehenden Ansprüche, dadurch gekennzeichnet, daß jeweils die Widerlagerleiste (9 bzw. 19) als Blechformteil ausgebildet ist.

29. Vorrichtung nach einem der Ansprüche 1 bis 27, dadurch gekennzeichnet, daß die Widerlagerleiste (9 bzw. 19) als Kunststofformling ausgebildet ist.

30. Vorrichtung nach einem der Ansprüche 23 bis 29, dadurch gekennzeichnet, daß die Stellschraube (39) als einen am Lagerflansch (35) des Antriebsmotors (26) angeordneten Mitnehmerstift mit einem an ihrem motorabtriebswellennahen Ende angeordneten Haltering umgreifende Augenschraube ausgebildet ist.

31. Vorrichtung nach Anspruch 30, dadurch gekennzeichnet, daß die Augenschraube mit ihrem halteringfernen freien Ende in ein Loch in einem sich von der Außenfläche des Lagerschildes (23) für den Antriebsmotor (26) wegerstreckend fest angeordneten Widerlagerflansch (38) eingreift oder dieses durchgreift und eine sich auf der motorabtriebswellennahen Seite desselben in Anlage an einer Druckfläche an diesem befindende Stellmutter aufweist.

32. Vorrichtung nach einem der Ansprüche 23 bis 29, dadurch gekennzeichnet, daß die Stellschraube (39) als an einer Druckfläche auf der benachbarten Seite des Lagerflansches (35) Antriebsmotors (26), vorzugsweise dessen Mantelfläche, mit seinem motorabtriebswellennahen freien Ende in Anlage bringbarer Gewindestift ausgebildet ist.

33. Vorrichtung nach Anspruch 32, dadurch gekennzeichnet, daß der Gewindestift (39) in einem Innengewinde eines Gewindeloches in einem sich von der Außenoberfläche des Lagerschildes (23) für den Antriebsmotor (26) wegerstreckend fest angeordneten Widerlagerflansch (38) geführt ist.

34. Vorrichtung nach einem der Ansprüche 19 bis 33, dadurch gekennzeichnet, daß zwischen Lagerflansch (35) und Lagerschild (23) des Antriebsmotors (26) ein Distanzring (28) angeordnet ist, der eine einem sich axial vom Lagerflansch (35) nach außen wegerstreckenden Zentrierflansch (42) aufnehmende Ausnehmung (43) und eine mindestens der axialen Länge dieses Zentrierflansches (42) entsprechende Dicke aufweist.

**Revendications**

1. Dispositif de tension pour la bande de transport d'un dispositif transporteur à bande qui comporte un rouleau d'entrée et un rouleau de sortie, l'un au moins de ces rouleaux étant maintenu, par rapport au châssis (2) du dispositif transporteur à bande (1), par une paire de supports de rouleau (7, 17, 23) qui sont respectivement guidés, avec liberté de coulissement, dans deux lumières oblongues (8, 18, 24) par rapport à ce châssis, transversalement à l'arbre ou à l'axe du rouleau, et peuvent être bloqués en position de travail au moyen d'éléments filetés (21) traversant ces lumières, étant précisé que la position de travail respective de chaque support de rouleau (7, 17, 23) est déterminée par un mécanisme de tension respectivement associé comportant une tige filetée (12, 22) qui, par son extrémité proche du support de rouleau, s'appuie contre une face frontale de support de rouleau (7, 17, 23) associé, et qui, par son extrémité éloignée du support de rouleau, est guidée, avec liberté de déplacement axial, dans un gousset solidaire du châssis, tout en pouvant être immobilisée dans n'importe quelle position axiale, tandis que chaque support de rouleau (7, 17, 23) présente au moins deux lumières oblogues (8, 18, 24) disposées, l'une derrière l'autre dans la direction de la tension, sur une ligne qui, au moins du côté d'un des rouleaux, coupe l'axe de rotation (a, b) du rouleau (5, 15) qu'il porte, caractérisé en ce qu'à chaque support de rouleau (7, 17, 23), est associée une éclisse de contre-butée (9, 19) qui est distincte du châssis (2) et contre laquelle s'applique le support de rouleau (7, 17, 23) par sa surface située du côté du châssis ou par sa surface tournée à l'opposé du châssis (2), cette éclisse de contre-butée étant maintenue par les éléments filetés (21) qui traversent les lumières oblongues (8, 18, 24) du support de rouleau (7, 17, 23) correspondant et sont reçus dans le châssis (2), et présentant, à son extrémité éloignée du rouleau, un bord replié de contre-butée (9a, 19a) qui passe par dessus l'extrémité, éloignée du rouleau, du support de rouleau (7, 17, 23) associé et qui présente un taraudage, étant précisé que l'un des supports (7 ou 17, 23) du rouleau d'entrée (5) ou du rouleau de sortie (15) est conçu sous la forme d'un palier-flasque (23) pour maintenir, fixe par rapport au châssis, un moteur d'entraînement (26) qui, de préférence, est conçu sous forme d'un moto-réducteur muni d'un mécanisme d'accouplement pour l'accouplement direct de son arbre de sortie avec l'arbre (par exemple 16), constituant l'arbre d'entraînement du rouleau d'entrée ou du rouleau de sortie (par exemple 15) associé, ou bien d'une transmission cinématique par lien flexible sous forme d'un mécanisme à courroie ou à chaîne (29).

2. Dispositif selon la revendication 1, caractérisé en ce que les supports (7 ou 17, 23) du rouleau d'entrée (5) et/ou du rouleau de sortie (15) sont conçus sous la forme de paliers-flasques pour un rouleau de guidage (40) monté en amont ou en aval de ce rouleau.

3. Dispositif de tension pour la bande de transport d'un dispositif transporteur à bande qui comporte un rouleau d'entrée et un rouleau de sortie, l'un au moins de ces rouleaux étant maintenu, par rapport au châssis (2) du dispositif transporteur à bande (1), par une paire de supports de rouleau (7, 17, 23) qui sont respectivement guidés, avec liberté de coulissement, dans deux lumières oblongues (8, 18, 24) par rapport à ce châssis, transversalement à l'arbre ou à l'axe du rouleau, et peuvent être bloqués en position de travail au moyen d'éléments filetés (21) traversant ces lumières, étant précisé que la position de travail respective de chaque support de rouleau (7, 17, 23) est déterminée par un mécanisme de tension associé comportant une tige filetée (12, 22) qui, par son extrémité proche du support de rouleau, s'appuie contre une face frontale du support de rouleau (7, 17, 23) associé et qui, par son extrémité éloignée du support de rouleau, est guidée, avec une liberté de déplacement axial, dans un gousset solidaire du châssis, tout en pouvant être immobilisée dans n'importe quelle position axiale, tandis que les supports de rouleau (7, 17, 23) présentent chacun au moins deux lumières oblongues (8, 18, 24) disposées, l'une derrière l'autre dans la direction de la tension, sur une ligne qui, au moins du côté d'un des rouleaux, coupe l'axe de rotation (a, b) du rouleau (5, 15) qu'il porte, caractérisé en ce qu'à chaque support de rouleau (7, 17, 23) est associée une éclisse de contre-butée (9, 19) qui est distincte du châssis (2), contre laquelle s'applique le support de rouleau (7, 17, 23) par sa surface située du côté du châssis ou par sa surface tournée à l'opposé du châssis (2), cette éclisse de contre-butée étant maintenue par les éléments filetés (21) qui traversent les lumières oblongues (8, 18, 24) du support de rouleau (7, 17, 23) associé et sont reçus dans le châssis (2), et présentant, à son extrémité éloignée du rouleau, un bord replié de contre-butée (9a, 19a) qui passe par dessus l'extrémité, éloignée du rouleau, du support de rouleau (7, 17, 23) associé et qui présente un taraudage, étant précisé que l'éclisse de contre-butée (9 ou 19) de l'un des supports (7 ou 17, 23) du rouleau d'entrée (5) ou du rouleau de sortie (15) est conçue sous la forme d'un palier-flasque (23) pour maintenir, fixe par rapport au châssis, un moteur d'entraînement (26) qui de préférence, est conçu sous forme d'un moto-réducteur muni d'un mécanisme d'accouplement pour l'accouplement direct de son arbre de sortie avec l'arbre (par exemple 16) constituant l'arbre d'entraînement du rouleau d'entrée ou du rouleau de sortie (par exemple 15) correspondant ou bien d'une transmission cinématique par lien flexible sous forme d'un mécanisme à courroie ou à chaîne (29).

4. Dispositif selon la revendication 3, caractérisé en ce que les éclisses de contre-butée (9 ou 19) des supports (7 ou 17, 23) du rouleau d'entrée (5) et/ou du rouleau de sortie (15) sont conçues sous la forme de paliers-flasques pour un rouleau de guidage (40) monté en amont ou en aval de ce rouleau.

5. Dispositif selon la revendication 1 ou 3, caractérisé en ce que l'un des supports d'un rouleau d'entraînement prévu en plus du rouleau d'entrée et du rouleau de sortie (5 resp. 15) est conçu sous forme d'un palier-flasque pour maintenir, fixe par rapport au châssis, un moteur d'entraînement (26) conçu de préférence sous forme d'un moto-réducteur avec un mécanisme d'accouplement pour l'accouplement direct de son arbre de sortie (27) avec l'arbre du rouleau d'entraînement ou d'une transmission cinématique par lien flexible sous forme d'un mécanisme à courroie ou à chaîne (29).

6. Dispositif selon la revendication 5, caractérisé en ce que les supports du rouleau d'entraînement, prévu en plus du rouleau d'entrée et du rouleau de sortie (5 resp. 15), sont conçus sous la forme de paliers-flasques pour un rouleau de guidage (40) monté en amont ou en aval de ce rouleau d'entraînement, de préférence pour, respectivement, un rouleau de guidage (40) monté en amont du rouleau d'entraînement et un rouleau de guidage (40) monté en aval du rouleau d'entraînement.

7. Dispositif selon la revendication 5, caractérisé en ce que l'éclisse de contre-butée de l'un des supports du rouleau d'entraînement, prévu en plus du rouleau d'entrée et du rouleau de sortie (5 resp. 15), est conçue sous la forme d'un palier-flasque pour maintenir, fixe par rapport au châssis, un moteur d'entraînement (26) conçu de préférence sous forme d'un moto-réducteur muni d'un mécanisme d'accouplement pour l'accouplement direct de son arbre de sortie (27) avec l'arbre du rouleau d'entraînement ou d'une transmission cinématique par lien flexible sous forme d'un mécanisme à courroie ou à chaîne (29).

8. Dispositif selon la revendication 7, caractérisé en ce que les éclisses de contre-butée des supports du rouleau d'entraînement, prévu en plus du rouleau d'entrée et du rouleau de sortie (5 resp. 15), sont conçus sous la forme de paliers-flasques pour un rouleau de guidage (40) monté en amont ou en aval de ce rouleau d'entraînement de préférence pour, respectivement, un rouleau de guidage (40) monté en amont du rouleau d'entraînement et un rouleau de guidage (40) monté en aval du rouleau d'entraînement.

9. Dispositif selon l'une des revendications précédentes, caractérisé en ce que les lumières (8 ou 18 ou 24) ménagées dans les supports de rouleau (7 ou 17, 23) sont disposées à une distance de l'arête supérieure du support de rouleau associé (7 ou 17, 23), qui correspond à la distance entre les trous (3) prévus, pour les éléments filetés, dans le châssis (2) du dispositif transporteur à bande (1) et l'arête supérieure de ce châssis.

10. Dispositif selon l'une des revendications précédentes, caractérisé en ce que les lumières (8 ou 18 ou 24) sont disposées à une distance de l'arête supérieure du support de rouleau associé (7 ou 17, 23), correspondant au moins à approximativement la moitié de la hauteur hors-tout du châssis (2) du dispositif transporteur à bande (1).

11. Dispositif selon l'une des revendications précédentes, caractérisé en ce que les lumières (8 ou 18 ou 24) ménagées dans les supports de rouleau (7 ou 17, 23) sont disposées à peu près centralement dans ces supports.

12. Dispositif selon la revendication 11, caractérisé en ce que les lumières (8 ou 18 ou 24) sont respectivement disposées sur la ligne médiane, parallèle à la direction de transport (F), du support de rouleau correspondant (7 ou 17, 23).

13. Dispositif selon l'une des revendications précédentes, caractérisé en ce que les lumières (8 ou 18 ou 24) sont respectivement centrées par rapport à une perpendiculaire à la direction de transport (F).

14. Dispositif selon l'une des revendications précédentes, caractérisé en ce que les lumières (8 ou 18 ou 24) sont respectivement disposées un peu au-dessus du point où l'axe de rotation (a ou b) du rouleau correspondant (5 ou 15) rencontre les supports de rouleau (7 ou 17, 23) de ce dernier.

15. Dispositif selon l'une des revendications 1 à 13, caractérisé en ce que les lumières (8 ou 18 ou 24) sont respectivement disposées un peu au-dessous du point où l'axe de rotation(a ou b) du rouleau correspondant (5 ou 15) rencontre les supports de rouleau (7 ou 17, 23) de ce dernier.

16. Dispositif selon l'une des revendications 1 à 13, caractérisé en ce que les lumières (8 ou 18 ou 24) sont respectivement disposées sur une ligne qui coupe l'axe de rotation (a ou b) du rouleau correspondant (5 ou 15).

17. Dispositif selon l'une des revendications précédentes, caractérisé en ce que les lumières (8 ou 18 ou 27) ménagées dans les supports de rouleau (7 ou 17, 23) sont prévues dans une disposition correspondant à la disposition en trame de trous (3) disposés, selon une trame linéaire à entraxe constant, dans une aile (2b), ou une partie de paroi, du châssis (2) du dispositif transporteur à bande (1), qui s'étend à peu près verticalement.

18. Dispositif selon l'une des revendications précédentes, caractérisé en ce qu'il est respectivement prévu une plaquette de serrage (64) qui vient saisir, par derrière, la partie (2b) du dispositif transporteur à bande (1) qui présente les trous taraudés (3) pour la fixation d'un support de rouleau (7 ou 17, 23) sur le châssis (2) du dispositif transporteur à bande (1).

19. Dispositif selon l'une des revendications 1 à 18, caractérisé en ce que le palier-flasque (23) du moteur d'entraînement (26) présente un nombre, correspondant au nombre des trous de fixation (36) traversant une bride de palier (35) du moteur d'entraînement (26), de lumières oblogues (37) s'étendant dans la direction de tension prévue, dont la longueur correspond au moins à l'amplitude maximale prédéterminée du mouvement de décalage de l'arbre de sortie du moteur d'entraînement (26) et dont une au moins coupe, par son axe médian, l'axe de rotation (c) de l'arbre de sortie du moteur d'entraînement (26).

20. Dispositif selon la revendication 19 muni d'un nombre pair de trous de fixation dans la bride de palier (35) du moteur d'entraînement, caractérisé en ce qu'il est prévu dans le palier-flasque (23) du moteur d'entraînement (26), deux lumières oblongues (37) qui correspondent aux trous de fixation (36) situés en face dans la bride de palier (35) du moteur d'entraînement (26), lumières dont la longueur correspond au moins à l'amplitude maximale prédéterminée du mouvement de décalage de l'arbre de sortie du moteur d'entraînement (26) et dont la disposition est telle qu'elles s'étendent ensemble dans la direction de tension prévue et qu'elles coupent, par leur axe médian commun, l'axe de rotation (c) de l'arbre de sortie (27) du moteur d'entraînement (26).

21. Dispositif selon la revendication 19 ou 20, caractérisé en ce que le palier-flasques (23) du moteur d'entraînement (26) présente, pour l'arbre de sortie du moteur d'entraînement (26), un évidement de passage (25) conçu sous forme d'une lumière oblongue qui s'étend dans la direction de tension prévue et dont la longueur correspond au moins à l'amplitude maximale prédéterminée du mouvement de décalage de l'arbre de sortie du moteur d'entraînement (26).

22. Dispositif selon l'une des revendications 19 à 21, caractérisé par un mécanisme de reprise de réglage (38, 39), pour reprendre en continu le réglage de la bride de palier (35) du moteur d'entraînement (26), dans la direction de tension prévue, mécanisme qui vient en prise, de par la forme, avec la vis (30) de fixation du moteur d'entraînement (26) sur son palier-flasque (23), cette vis passant à travers la lumière (25) ou les lumières oblongues (37), qui, par sa ou leur ligne médiane, coupe ou coupent l'axe de rotation (c) de l'arbre de sortie du moteur d'entraînement (26).

23. Dispositif selon la revendication 22, caractérisé en ce que le mécanisme de reprise de réglage (38, 39) présente, en correspondance avec chaque bride de palier (35) du moteur d'entraînement (26), une vis de positionnement respective qui est solidaire du châssis ou du palier-flasque, et au moyen de laquelle on peut reprendre le réglage de la bride de palier (35) dans la direction de tension prévue.

24. Dispositif selon la revendication 22 ou 23, caractérisé en ce que le palier-flasque (23) du moteur d'entraînement (26) présente une nervure de contre-butée (38) qui est solidaire de sa surface extérieure et s'étend en s'en éloignant, et contre laquelle s'appuie une vis de positionnement (39) qui s'appuie par ailleurs contre le châssis (2) du dispositif transporteur à bande (1) ou contre la bride de palier (35) du moteur d'entraînement (26).

25. Dispositif selon la revendication 24, caractérisé en ce que la vis de positionnement (39) se visse dans un taraudage de la nervure de contre-butée (38) du palier-flasque (23) du moteur d'entraînement (26) et s'appuie contre une surface de butée prévue sur le châssis (2) du dispositif transporteur à bande (1) ou sur la bride de palier (35) du moteur d'entraînement (26).

26. Dispositif selon la revendication 24, caractérisé en ce que la vis de positionnement (39) se visse dans un taraudage prévu sur le châssis (2) du dispositif transporteur à bande (1) ou sur la bride de palier (35) du moteur d'entraînement (26), et s'appuie contre une surface de butée du palier flasque (23) du moteur d'entraînement (26), en passant de préférence à travers un perçage ménagé dans la nervure de contre-butée (38) de ce palier-flasque (23).

27. Dispositif selon la revendication 25 ou 26, caractérisé en ce que le taraudage est formé par le filetage intérieur d'un écrou soudé à la nervure de contre-butée (38) du palier-flasque (23) du moteur d'entraînement (26) ou au châssis (2) du dispositif transporteur à bande (1) ou à la bride de palier (35) du moteur d'entraînement (26), concentriquement à un perçage ménagé dans cette nervure, ce châssis ou cette bride.

28. Dispositif selon l'une des revendications précédentes, caractérisé en ce que chaque éclisse de contre-butée (9 ou 19) est réalisée sous la forme d'une pièce profilée en tôle.

29. Dispositif selon l'une des revendications 1 à 27, caractérisé en ce que l'éclisse de contre-butée (9 ou 19) est réalisée sous la forme d'une pièce profilée en matière plastique.

30. Dispositif selon l'une des revendications 23 à 29, caractérisé en ce que la vis de positionnement (39) est conçue sous forme d'une vis à oeillet qui enserre un entraîneur, disposé sur la bride de palier (35) du moteur d'entraînement (26) et muni d'une bague d'arrêt disposée à son extrémité proche de l'arbre de sortie du moteur.

31. Dispositif selon la revendication 30, caractérisé en ce que la vis à oeillet s'engage, par son extrémité libre éloignée de la bague d'arrêt, dans un trou ménagé dans une nervure de contre-butée (38) s'étendant en s'en éloignant, sur la surface extérieure, dont elle est solidaire du palier-flasque (23) du moteur d'entraînement (26), ou bien traverse ce trou, et présente un écrou de positionnement qui se trouve sur cette nervure, du côté de celle-ci proche de l'arbre de sortie du moteur et au contact d'une surface de pression.

32. Dispositif selon l'une des revendications 23 à 29, caractérisé en ce que la vis de positionnement (39) est conçue sous forme d'une tige filetée qui, par son extrémité libre proche de l'arbre de sortie du moteur, peut venir au contact d'une surface de pression prévue sur la face voisine de la bride de palier (35) du moteur d'entraînement (26), de préférence sur sa surface périphérique.

33. Dispositif selon la revendication 32, caractérisé en ce que la tige filetée (39) se visse dans un taraudage d'un trou taraudé prévu dans une nervure de contre-butée (38) solidaire de la surface extérieure du palier-flasque (23) du moteur d'entraînement (26) et s'étendant en s'en écartant.

34. Dispositif selon l'une des revendications 19 à 33, caractérisé en ce qu'entre la bride de palier (35) et le palier-flasque (23) du moteur d'entraînement (26), est disposée une bague d'écartement (28) qui présente un évidement (43) logeant une bride de centrage (42) s'étendant vers l'extérieur, en s'éloignant de la bride de palier (35), et possède une épaisseur correspondant au moins à la longueur axiale de cette bride de centrage (42).

**Claims**

1. Tensioning device for the conveyor belt of a belt conveyor apparatus which embraces a take-up roller and a delivery roller, wherein at least one roller is held relative to the framework (2) of the belt conveyor apparatus (1) by a pair of roller bearers (7, 17, 23) which are guided for displacement relative to the framework transversely to the roller shaft or axle by each having two elongate holes (8, 18, 24) and which can be fixed in the working position by means of screw elements (21) passing through said holes, wherein the particular working position of each roller bearer (7, 17, 23) is determined by a respective associated tensioning device comprising a threaded bolt (12, 22) which is supported at its end adjacent to the roller bearer against a face of the associated roller bearer (7, 17, 23), which has its end remote from the roller bearer guided axially displaceably in a flange rigid with the framework, and which can be fixed in any axial position, and wherein each roller bearer (7, 17, 23) has at-least two elongate holes (8, 18, 24) arranged in sequence in the tensioning direction on a line cutting at least close to one of the axes of rotation (a, b) of the rollers (5, 15) mounted thereon, characterised in that each roller bearer (7, 17, 23) has associated therewith a thrust strip (9, 19) separate from the framework (2) and against which the face of the roller bearer (7, 17, 23) on the framework side or on the side remote from the framework (2) abuts, said thrust strip being held by the screw elements (21) received by the framework (2) and extending through the elongate holes (8, 18, 24) of the associated roller bearer (7, 17, 23), and said thrust strip having at its end remote from the roller a thrust flange (9a, 19a) having an internal thread and overlapping the end of the associated roller bearer (7, 17, 23) which is remote from the roller, wherein the roller bearer (7 and 17, 23) of the take-up roller (5) or of the delivery roller (15) is formed as a bearing bracket (23) for the mounting of a drive motor (26) to be rigid with the framework, said motor preferably being a geared motor with a coupling device for direct coupling of its take-off shaft either with the shaft (e.g. 16) of the associated take-up or delivery roller (e.g. 15) serving as driving shaft or with a kinematic transmission means in the form of a belt or chain drive (29).

2. Device according to claim 1, characterised in that the roller bearer (7 and 17, 23) of the take-up roller (5) and/or of the delivery roller (15) is/are formed as bearing brackets for a guide roller (40) positioned in advance of or following the said roller.

3. Tensioning device for the conveyor belt of a belt conveyor apparatus which embraces a take-up roller and a delivery roller, wherein at least one roller is held relative to the framework (2) of the belt conveyor apparatus (1) by a pair of roller bearers (7, 17, 23) which are guided for displacement relative to the framework transversely to the roller shaft or axle by each having two elongate holes (8, 18, 24) and which can be fixed in the working position by means of screw elements (21) passing through said holes, wherein the particular working position of each roller bearer (7, 17, 23) is determined by a respective associated tensioning device comprising a threaded bolt (12, 22) which is supported at its end adjacent to the roller bearer against a face of the associated roller bearer (7, 17, 23), which has its end remote from the roller bearer guided axially displaceably in a flange rigid with the framework, and which can be fixed in any axial position, and wherein each roller bearer (7, 17, 23) has at least two elongate holes (8, 18, 24) arranged in sequence in the tensioning direction on a line cutting at least close to one of the axes of rotation (a, b) of the rollers (5, 15) mounted thereon, characterised in that each roller bearer (7, 17, 23) has associated therewith a thrust strip (9, 19) separate from the framework (2) and against which the face of the roller bearer (7, 17, 23) on the framework side or on the side remote from the framework (2) abuts, said thrust strip being held by the screw elements (21) received by the framework (2) and extending through the elongate holes (8, 18, 24) of the associated roller bearer (7, 17, 23), and said thrust strip having at its end remote from the roller a thrust flange (9a, 19a) having an internal thread and overlapping the end of the associated roller bearer (7, 17, 23) which is remote from the roller, wherein the thrust strip (9 and 19) of one of the roller bearers (7 and 17, 23) of the take-up roller (5) or of the delivery roller (15) is formed as a bearing bracket to hold a drive motor (26) mounted rigid with the framework, said drive motor preferably being a geared motor with a coupling device for direct coupling of its take-off shaft either with the shaft (e.g. 16) of the associated take-up or delivery roller (e.g. 15) serving as driving shaft or with a kinematic transmission means in the form of a belt or chain drive (29).

4. Device according to claim 3, characterised in that the thrust strips (9 and 19) of the roller bearers (7 and 17, 23) of the take-up roller (5) and/or the delivery roller (15) are formed as bearing brackets for a guide roller (40) positioned in advance of or following the said roller.

5. Device according to claim 1 or 3, characterised, in that one of the roller bearers of a drive roller provided as additional to the take-up and delivery rollers (5 and 15) is formed as a bearing bracket for the mounting of a drive motor (26) to be rigid with the framework, said motor preferably being a geared motor with a coupling device for the direct coupling of its take-off shaft (27) with the shaft of the drive roller or with a kinematic transmission means in the form of a belt or chain drive (29).

6. Device according to claim 5, characterised in that the roller bearers of the drive rollers provided as additional to the take-up and delivery rollers (5 and 15) are formed as bearing brackets for a guide roller (40) positioned in advance of or following the said rollers, said guide rollers preferably being provided one in advance of one following each of the said rollers one following the other of the said rollers.

7. Device according to claim 5, characterised in that the thrust strip of one of the roller bearers of the drive rollers provided as additional to the take-up and delivery rollers (5 and 15) is formed as a bearing bracket for the mounting of a drive motor (26) so as to be rigid with the framework, said drive motor preferably being a geared motor with a coupling device for direct coupling of its take-off shaft (27) with the shaft of the drive roller or with a kinematic transmission means in the form of a belt or chain drive (29).

8. Device according to claim 7, characterised in that the thrust strips of the roller bearers of the drive rollers provided as additional to the take-up and delivery rollers (5 and 15) are formed as bearing brackets for a guide roller (40) positioned in advance of or following the said rollers, preferably a guide roller (40) positioned in advance of one of the said rollers and one following the other of the said rollers.

9. Device according to one of the preceding claims, characterised in that the elongate holes (8 and 18 and 24) in the roller bearers (7 and 17, 23) are arranged at a distance from the upper edge of the associated roller bearer (7 and 17, 23) corresponding to the hole spacing of the screw holes (3) in the framework (2) of the belt conveyor apparatus (1) from its upper edge.

10. Device according to one of the preceding claims, characterised in that the elongate holes (8 and 18 and 24) are arranged at a spacing from the upper edge of the associated roller bearer (7 and 17, 23) which corresponds at least approximately to half the structural height of the framework (2) of the belt conveyor apparatus (1).

11. Device according to one of the preceding claims, characterised in that the elongate holes (8 and 18 and 24) are arranged in the roller bearers (7 and 17, 23) approximately centrally in these bearers.

12. Device according to claim 11, characterised in that the elongate holes (8 and 18 and 24) are each arranged on the centre line of the associated roller bearer (7 and 17, 23) which extends parallel to the conveying direction (F).

13. Device according to one of the preceding claims, characterised in that the elongate holes (8 and 18 and 24) are centred in relation to a line normal to the conveying direction (F).

14. Device according to one of the preceding claims, characterised in that the elongate holes (8 and 18 and 24) are each arranged slightly above the penetration point of the axis of rotation (a and b) of the associated roller (5 and 15) through its roller bearer (7 and 17, 23).

15. Device according to one of claims 1 to 13, characterised in that the elongate holes (8 and 18 and 24) are each arranged slightly below the penetration point of the axis of rotation (a and b) of the associated roller (5 and 15) through its roller bearer (7 and 17, 23).

16. Device according to one of claims 1 to 13, characterised in that the elongate holes (8 and 18 and 24) are each arranged on a line intersecting the axis of rotation (a and b) of the associated roller (5 and 15).

17. Device according to one of the preceding claims, characterised in that the elongate holes (8 and 18 and 27) are provided in the roller bearers (7 and 17, 23) in an array corresponding to the pattern of holes (3) provided with the same hole spacing according to a linear pattern in a substantially vertically extending web (2b) or wall portion of the framework (2) of the belt conveyor apparatus (1).

18. Device according to one of the preceding claims, characterised in that a clamping plate (64) is provided to engage behind the said part (2b) which includes the screw holes (3) for the fastening of a roller bearer (7 and 17, 23) to the framework (2) of the belt conveyor apparatus (1).

19. Device according to one of claims 1 to 18, characterised in that the bearing bracket (23) for the drive motor (26) has a number of elongate holes (37) extending in the prescribed tensioning direction corresponding to the number of the fixing holes (36) extending through a bearing flange (35) of the drive motor (26), with said elongate holes having a length corresponding at least to the predetermined maximum dimension of the pitch movement of the take-off shaft of the drive motor (26), and with at least one of said elongate holes having its centre line intersecting the rotational axis (c) of the take-off shaft of the drive motor (26).

20. Device according to claim 19 with an even number of fixing holes in the bearing flange (35) of the drive motor, characterised in that elongate holes (37) of the bearing bracket (23) of the drive motor (26) corresponding to two opposed fixing holes (36) in the bearing flange (35) of the drive motor (26) and of a length corresponding at least to the predetermined maximum dimension of the pitch movement of the take-off shaft of the drive motor (26) are provided in an arrangement extending jointly in the prescribed tensioning direction and having their common centre line intersecting the axis of rotation (c) of the take-off shaft (27) of the drive motor (26).

21. Device according to claim 19 or 20, characterised in that the bearing bracket (23) for the drive motor (26) has an apertured recess (25) for the take-off shaft of the drive motor (26) formed as an elongate hole extending in the prescribed tensioning direction and of a length corresponding at least to the predetermined maximum dimension of the pitch movement of the take-off shaft of the drive motor (26).

22. Device according to one of claims 19 to 21, characterised by an adjusting device (38, 39) for stepless adjustment of the bearing flange (35) of the drive motor (26) in the prescribed tensioning direction, said adjusting device positively engaging with the screw bolt (30) for the fixing of the drive motor (26) on its bearing bracket (23), and with said screw bolt penetrating an elongate hole (25) or elongate holes (37) which intersects or intersect with its or their centre lines the axis of rotation (c) of the take-off shaft of the drive motor (26).

23. Device according to claim 22, characterised in that the adjusting device (38, 39) comprises a setting screw (39) associated with each bearing flange (35) of the drive motor (26) and each mounted to be rigid with the framework or rigid with the bearing bracket, and by means of which setting screws the bearing flanges (35) are adjustable in the prescribed tensioning direction.

24. Device according to claim 22 or 23, characterised in that the bearing bracket (23) for the drive motor (26) comprises a thrust flange (38) arranged fixed extending away from its external surface, against which a setting screw (39) abuts, with said setting screw being seated on the other hand against the framework (2) of the belt conveyor apparatus (1) or against the bearing flange (35) of the drive motor (26).

25. Device according to claim 24, characterised in that the setting screw (39) is guided in a thread of the thrust flange (38) of the bearing bracket (23) for the drive motor (26) and is seated against an abutment surface on the framework (2) of the belt conveyor apparatus (1) or against the bearing flange (35) of the drive motor (26).

26. Device according to claim 24, characterised in that the setting screw (39) is guided in a thread provided on the framework (2) of the belt conveyor apparatus (1) or on the bearing flange (35) of the drive motor (26), and is seated itself against a stop surface, preferably penetrating through a bore in the thrust flange (38) of the bearing bracket (23) for the drive motor (26).

27. Device according to claim 25 or 26, characterised in that the thread is formed by the internal thread of a nut welded concentrically in relation to a bore in the thrust flange (38) of the bearing bracket (23) for the drive motor (26) or in the framework (2) of the belt conveyor apparatus (1) or in the bearing flange (35) of the drive motor (26).

28. Device according to one of the preceding claims, characterised in that each of the thrust strips (9 and 19) is formed as a sheet-form part.

29. Device according to one of claims 1 to 27, characterised in that the thrust strips (9 and 19) are formed as plastics mouldings.

30. Device according to one of claims 23 to 29, characterised in that the setting screw (39) is formed as an eye bolt comprising an entraining pin arranged on the bearing flange (35) of the drive motor (26) and a retaining ring arranged at the pin end adjacent to the motor take-off shaft.

31. Device according to claim 30, characterised in that the eye bolt has its free end remote from the retaining ring engaged in a hole in a thrust flange (38) arranged fixedly and extending away from the external surface of the bearing bracket (23) for the drive motor (26), or passes through this and comprises an adjusting nut on the motor take-off shaft side thereof in contact with a contact surface on this.

32. Device according to one of claims 23 to 29, characterised in that the setting screw (39) is formed as a threaded pin which can be brought into contact with a contact surface on the adjacent side of the bearing flange (35) of the drive motor (26), preferably its sleeve surface, and in contact with its motor take-off shaft side free end.

33. Device according to claim 32, characterised in that the threaded pin (39) is guided in an internal thread of a threaded hole in a thrust flange (38) which is arranged fixed and extending away from the external surface of the bearing bracket (23) for the drive motor (26).

34. Device according to one of claims 19 to 33, characterised in that between bearing flange (35) and bearing bracket (23) of the drive motor (26) there is provided a spacing ring (28) which has a recess (43) receiving a centering flange (42) which extends outwardly axially away from the bearing flange (35) and which also has a thickness corresponding at least to the axial length of this centering flange (42).

*Fig.1*

EP 0 127 748 B1

PATENTANWALT
HANS-JOACHIM KANTNER
DIPL.-INGENIEUR
6070 LANGEN/HESSEN
DARMSTR. 8
TELEFON: (0 61 03) 2 30 29

*Fig.2*

EP 0 127 748 B1